# FASCICULE DE BREVET EUROPEEN

(11) **EP 4 457 406 B1**
(45) Date de publication et mention de la délivrance du brevet: **17.09.2025**
(21) Numéro de dépôt: 22844186.1
(22) Date de dépôt: 26.12.2022
(51) Int. Cl.: E04B 1/19, F16S 3/08, E04B 1/00, E04B 1/343

(54) **STRUCTURE PORTANTE AUTOPORTEUSE**
SELBSTTRAGENDE TRAGSTRUKTUR
SELF-SUPPORTING LOAD-BEARING STRUCTURE

(30) Priorité: 27.12.2021 FR 2114562
(43) Date de publication de la demande: 06.11.2024
(73) Titulaire: Lozneanu, Boris, 05310 Freissinières (FR)
(72) Inventeur: Lozneanu, Boris, 05310 Freissinières (FR)
(74) Mandataire: Oak & Fox
(86) Numéro de dépôt international: PCT/EP2022/087847
(87) Numéro de publication internationale: WO 2023/126388

(56) Documents cités:
- US-A1- 2005 016 109
- US-A1- 2006 027 071
- LES SUBS: "Festival Entrée des Artistes - édition 2018", 4 October 2018 (2018-10-04), XP055959581, Retrieved from the Internet <URL:https://www.youtube.com/watch?v=ELlVmUOWBWI>
- JOYANDFUN: "How to Make a Hyperboloid! Easy DIY", 27 July 2019 (2019-07-27), XP093034167, Retrieved from the Internet <URL:https://www.youtube.com/watch?v=OvVBmMcoHbE> [retrieved on 20230323]
- ANONYMOUS: "Brianchon's Theorem - The Inner Frame", 6 December 2015 (2015-12-06), XP093034457, Retrieved from the Internet <URL:https://theinnerframe.org/tag/brianchons-theorem/> [retrieved on 20230324]

## Description

### Domaine de l'invention

L'invention se rapporte au domaine des structures portantes. Plus particulièrement, l'invention se rapporte au domaine des structures portantes autoporteuses pouvant être déclinées comme structures de support dans des domaines variés tels que l'habitat, les meubles, ou encore les arts du spectacle.

### État de la technique

Il est bien connu dans l'art antérieur d'utiliser des structures portantes pour une variété d'applications, par exemple pour servir d'ossature lors de la réalisation de constructions diverses telles que des tentes, des tipis, des chapiteaux, ou tout type structure similaire servant de support à divers habillages pouvant prendre la forme de toiles ou de tissus souples. D'autres déclinaisons connues de l'art antérieur des structures portantes se trouvent dans la réalisation de supports d'activités ludiques tels que par exemple des portiques de jeux. On connaît également dans l'art antérieur la mise en œuvre de structures portantes dans le domaine de l'architecture. De telles structures peuvent notamment présenter des poutres agencées les unes par rapport aux autres de sorte à obtenir une bonne stabilité et une résistance aux efforts en fonction des éléments à soutenir. On connaît par exemple dans le domaine de la charpente l'agencement de sections de bois entre elles pour former des fermes destinées à supporter le poids de la couverture d'un édifice. De telles structures peuvent être autoporteuses, c'est-à-dire que leur stabilité est assurée par la seule rigidité de leur forme. La tour Eiffel en est un exemple bien connu.

L'art antérieur divulgue des types de structures portantes autoporteuses caractérisées notamment par leur légèreté, leur stabilité et leur capacité à présenter une résistance aux efforts accrue. Par exemple, le brevet ES2482365 divulgue un module structurel de tenségrité ayant des applications dans le domaine de la conception de structures légères. Dans une telle structure, des éléments structurels rigides, tels que des poutres, sont reliés entre eux par des câbles, de sorte à obtenir une répartition et un équilibre des contraintes mécaniques dans la totalité de la structure. De telles structures de tenségrité se retrouvent en architecture, par exemple dans les sphères géodésiques dans lesquelles des barres géodésiques sont agencées en treillis et suivent les grands cercles de la sphère pour former ladite structure. Bien que les structures de tenségrité présentent l'avantage d'être légères et d'optimiser l'espace intérieur de la structure en s'affranchissant de l'utilisation de piliers internes pour soutenir la structure, leur conception implique des contraintes liées à la mise en œuvre de câbles entre les poutres ou les barres pour répartir les contraintes mécaniques, et ainsi obtenir l'autoportance recherchée. De plus, la conception des structures de tenségrité implique des calculs préalables complexes pour assurer la stabilité finale de la structure. De tels calculs sont contraignants car ils nécessitent la mise en œuvre de logiciels performants.

On connaît également des structures dites réciproques. Le principe de réciprocité repose sur l'utilisation d'éléments porteurs qui se soutiennent les uns les autres mais jamais aux extrémités et forment une configuration spatiale sans hiérarchie structurelle définie.

D'autres types de structures autoporteuses sont divulguées dans l'art antérieur, notamment des structures autoporteuses pliables. C'est le cas de la demande de brevet US20080115816 A1 qui divulgue une structure autoporteuse pliable légère, compacte et résistante. La structure divulguée dans cette demande de brevet comprend notamment une pluralité de sections de cadres, essentiellement triangulaires, liées entre elles par des entretoises. Un des éléments d'entretoise de chaque section de cadre triangulaire est notamment pliable et creux pour permettre le pliage de la structure.

Toutefois, la stabilité au sol d'une telle structure est assurée par la mise en œuvre de sections triangulaires. De plus, pour une telle structure, il n'existe pas d'extensions au niveau des croisements entre les différents segments porteurs, et le volume intérieur de la structure stabilisée n'est pas optimisé. L'invention décrite dans le brevet US20080115816 nécessite également la mise en œuvre d'un assemblage aux extrémités des segments rectilignes pour résister à la majeure partie des efforts en compression et en traction.

L'invention vise à limiter au moins un des inconvénients précités.

### Résumé de l'invention

A ce titre, l'invention concerne une structure portante autoporteuse comportant un ensemble de N poutres, N étant pair et supérieur ou égal à six, la structure portante autoporteuse comprenant des éléments de liaison reliant les poutres entre elles et maintenant chaque poutre en appui contre une première poutre adjacente en un premier point d'appui haut de la poutre, et maintenant chaque poutre en appui contre une deuxième poutre adjacente en un deuxième point d'appui bas de la poutre, le premier point d'appui haut et le deuxième point d'appui bas étant distants d'une première extrémité basse de la poutre et d'une deuxième extrémité haute de la poutre, lesdites poutres étant configurées et les éléments de liaison reliant les poutres les unes aux autres de sorte que la structure portante autoporteuse se trouve dans une configuration montée dans laquelle :
La structure portante autoporteuse repose sur un support par les premières extrémités basses desdites poutres de l'ensemble ;
Chaque poutre croise la première poutre adjacente au niveau du premier point d'appui haut et croise la deuxième poutre adjacente au niveau du deuxième point d'appui bas;
Des projections des premiers points d'appui hauts et des deuxièmes points d'appui bas, sur un premier plan forment des sommets d'un polygone convexe dont chaque côté relie une projection d'un des premiers points d'appui hauts sur le premier plan à une projection d'un des deuxièmes points d'appui bas sur ledit premier plan.

Chaque poutre est :
Soit plus proche d'un axe vertical passant par un centre du polygone convexe que la première poutre adjacente, au niveau du premier point d'appui haut et plus éloignée de l'axe vertical que la deuxième poutre adjacente, au niveau du deuxième point d'appui bas ;
Soit plus éloignée de l'axe vertical que la première poutre adjacente, au niveau du premier point d'appui haut et plus proche de l'axe vertical que la deuxième poutre adjacente, au niveau du deuxième point d'appui bas.

Les longueurs, les formes et les poids des poutres, les formes de leurs extrémités, ainsi que les degrés de liberté de mouvement autorisés par les éléments de liaison et le positionnement des points d'appui sont choisis de façon à permettre à la structure portante d'être dans une configuration montée. Ces caractéristiques sont déterminées en fonction de la configuration du support, des contraintes environnementales, et du cas d'usage. Des poutres de formes irrégulières peuvent avantageusement être utilisées sans pour autant diminuer les propriétés portantes et autoportantes de la structure.

Un avantage est de résoudre le problème de l'art antérieur lié à l'optimisation du volume intérieur de la structure tout en assurant une stabilité, une autoportance et une simplicité de montage de la structure.

Un autre avantage est de réduire les contraintes de l'art antérieur liées à la quantité de matière nécessaire à la conception de la structure ainsi que les contraintes liées au liaisonnement des divers éléments structurels.

Un autre avantage est d'assurer une adaptabilité de la structure à diverses contraintes de terrains telles que des géométries de sol variables.

Un autre avantage est la possible déclinaison de la structure dans des domaines d'applications variés, tels que les meubles, les arts du spectacle, les serres de jardin, les structures ludiques pour enfants, les cabanes, les ponts et pontons, les garages, les appentis, les auvents, les arbres à chats, les volières, les structures de jardin telles que les pergolas, les tuteurs multidirectionnels, les abris de jardin, les structures publiques telles que les pare soleils et les paravents multidirectionnels ou les gradins abrités, les châssis tels que les châssis de panneaux photovoltaïques ou les chevalets pour peintres ou encore les supports de plateformes, telles que les supports de plateformes d'observation, les supports de plateformes pour parc d'accrobranche pour préserver les arbres de servir d'appui auxdites plateformes, ou les portiques de support de murs d'escalade dits « blocs d'escalade ».

Un autre avantage est de pouvoir réaliser des structures habitables résistantes, peu chères, et s'inscrivant dans une dynamique responsable d'un point de vue écologique.

Un autre avantage est de réaliser des structures habitables aussi stables et résistantes que des structures comprenant du béton, en s'affranchissant de l'utilisation de ce dernier.

Un autre avantage est de réaliser une structure stable sur un support dont la pente peut atteindre 15%.

Un autre avantage est de réaliser une structure pouvant être montée par une personne seule sans nécessiter l'utilisation d'outils complémentaires en plus des pièces comprises dans la structure.

Dans un mode de réalisation, des projections de chacune des premières et deuxièmes extrémités sur le premier plan se trouvent à l'extérieur du polygone convexe.

Un avantage est d'assurer, via des déports inclinés des portiques, une adaptabilité de la structure à diverses contraintes climatiques telles que des couloirs de vent ou des couloirs d'avalanche.

Dans un mode de réalisation, les poutres sont configurées et les éléments de liaison relient les poutres les unes aux autres de sorte que la structure est apte à être dans une configuration montée dans laquelle
- le polygone convexe est régulier ;
- des projections des premières extrémités des poutres sur le premier plan sont situées sur un même cercle de centre situé au centre du polygone.

Un avantage est de simplifier le montage de la structure. Un autre avantage est d'uniformiser les distances allant d'un premier point d'appui à un deuxième point d'appui le long de la structure.

Un autre avantage est d'avoir une configuration de la structure symétrique et particulièrement stable.

Un autre avantage est de pouvoir ancrer la structure au sol.

Dans un mode de réalisation, les poutres présentent sensiblement une même longueur et une première distance séparant le premier point d'appui de la première extrémité de chaque poutre est sensiblement égale à une deuxième distance séparant le deuxième point d'appui de la deuxième extrémité de la poutre et est sensiblement égale au tiers de la longueur de la poutre.

Un avantage est de renforcer la stabilité et la résistance aux efforts de la structure. Un autre avantage est de simplifier le montage de la structure par une disposition uniforme des extrémités basses. Un autre avantage est d'économiser la force de résistance du matériau constituant la poutre. Un autre avantage est d'économiser la quantité de matière nécessaire à la réalisation de la structure. Un autre avantage est d'augmenter la résistance aux efforts de la structure sur les portions des poutres situées entre deux points d'appui.

Dans un mode de réalisation, dans la configuration montée, les deuxièmes points d'appui appartiennent à un même deuxième plan sensiblement parallèle au premier plan et le premier plan est sensiblement perpendiculaire à la force de gravitation.

Dans un mode de réalisation, au moins un des éléments de liaison est apte à être dans une première configuration dans laquelle il autorise trois degrés de liberté en rotation entre la poutre et la première poutre adjacente à la poutre ou la deuxième poutre adjacente à la poutre.

Un avantage est de pouvoir modifier la configuration de la structure pour l'adapter au cas d'usage. Un autre avantage est de pouvoir modifier le volume intérieur de la structure. Un autre avantage est de pouvoir modifier les angles de croisement entre deux poutres adjacentes.

Dans un mode de réalisation, au moins un des éléments de liaison est apte à être dans une deuxième configuration dans laquelle il autorise deux degrés de liberté en translation entre une poutre de l'ensemble et la première poutre adjacente à la poutre ou la deuxième poutre adjacente à la poutre selon les axes longitudinaux respectifs de ladite poutre et de la première poutre adjacente à la poutre ou la deuxième poutre adjacente à la poutre.

Un avantage est de pouvoir modifier les positions auxquelles les poutres se croisent, par exemple en fonction de l'inclinaison du support. Un autre avantage est de pouvoir modifier le volume intérieur de la structure.

Dans un mode de réalisation, les éléments de liaison relient les poutres entre elles de sorte que, dans la configuration montée, chaque poutre de l'ensemble exerce :
▪ Soit une première force de réaction ayant une composante radiale par rapport à un axe parallèle à la force de gravitation et passant par un centre du polygone sur une première autre poutre, au niveau du premier point d'appui et selon un premier sens, et une deuxième force de réaction ayant une composante radiale selon un deuxième sens inverse au premier sens sur une deuxième autre poutre au niveau d'un deuxième point d'appui ;
▪ Soit une troisième force de réaction ayant une composante radiale par rapport à un axe parallèle à la force de gravitation et passant par un centre du polygone sur une deuxième autre poutre, au niveau du deuxième point d'appui et selon le premier sens, et une quatrième force de réaction ayant une composante radiale selon le deuxième sens inverse au premier sens sur une première autre poutre au niveau d'un premier point d'appui ;

Selon un autre aspect, l'invention concerne un kit de montage d'une structure portante autoporteuse selon l'invention comprenant :
▪ l'ensemble d'au moins six poutres, les longueurs des poutres étant comprises entre 0,5 mètres et 6 mètres, les premières extrémités des poutres étant usinées de sorte que, dans la configuration montée, les poutres présentent un unique point d'appui, ou une unique surface d'appui, sur le support en leurs premières extrémités ;
▪ les éléments de liaison, lesdits éléments de liaison étant aptes à relier les poutres entre elles de sorte que la structure portante autoporteuse soit apte à être dans la configuration montée,
▪ des embouts, chacun desdits embouts étant apte à recouvrir une portion d'une poutre à partir d'une première extrémité de la poutre.

Selon un autre aspect, l'invention concerne une structure pour l'habitat comprenant une structure portante autoporteuse selon l'invention.

Selon un autre aspect, l'invention concerne un meuble comprenant une structure portante autoporteuse selon l'invention.

Selon un autre aspect, l'invention concerne une serre de jardin comprenant une structure portante autoporteuse selon l'invention.

Selon un autre aspect, l'invention concerne une cabane comprenant une structure portante autoporteuse selon l'invention.

Selon un autre aspect, l'invention concerne un chapiteau comprenant une structure portante autoporteuse selon l'invention.

Selon un autre aspect, l'invention se rapporte également à une structure portante autoporteuse dans la configuration montée.

Selon un mode de réalisation, les projections des points d'appui hauts et des points d'appui bas de chaque poutre avec ses deux poutres adjacentes respectives sur le premier plan forment les extrémités d'un côté du polygone convexe.

Un avantage est d'optimiser le volume intérieur de la structure.

Selon un mode de réalisation, pour chaque poutre de la structure, les deuxièmes extrémités hautes sont plus éloignées de l'axe vertical que les premières extrémités basses.

Selon un mode de réalisation, pour chaque poutre de la structure, les premières extrémités basses sont plus éloignées de l'axe vertical que les deuxièmes extrémités hautes.

Selon un mode de réalisation, chaque poutre forme un portique avec la première poutre adjacente à ladite poutre, et forme un sous-portique avec la deuxième poutre adjacente à ladite poutre. Dans ce cas, la première poutre adjacente appartient également à un sous-portique adjacent au portique auquel appartient ladite première poutre adjacente.

Selon un mode de réalisation, chaque poutre forme un portique avec la première poutre adjacente à ladite poutre et forme un sous-portique avec la deuxième poutre adjacente à ladite poutre, et :
- chaque sous-portique présente un premier angle d'inclinaison par rapport au sol et orienté vers un centre de la structure inférieur à 90° ;
- chaque portique présente un deuxième angle d'inclinaison par rapport au sol et orienté vers l'extérieur de la structure inférieur à 90°.

Selon un mode de réalisation, des projections de chacune des premières extrémités basses et de chacune des deuxièmes extrémités hautes de chaque poutre sur le premier plan se trouvent à l'extérieur dudit polygone convexe.

Selon un mode de réalisation, chaque poutre présente au maximum deux points d'appui avec d'autres poutres de la structure.

Selon un mode de réalisation, les éléments de liaison relient les poutres entre elles de sorte que chaque poutre de l'ensemble exerce :
- Soit une première force de réaction ayant une composante radiale par rapport à un axe parallèle à la force de gravitation et passant par un centre du polygone sur la première poutre, au niveau du premier point d'appui haut et selon un premier sens, et une deuxième force de réaction ayant une composante radiale selon un deuxième sens inverse au premier sens sur la deuxième poutre immédiatement adjacente à ladite poutre et au niveau du deuxième point d'appui bas ;
- Soit une troisième force de réaction ayant une composante radiale par rapport à un axe parallèle à la force de gravitation et passant par un centre du polygone sur la deuxième poutre immédiatement adjacente à ladite poutre, au niveau du deuxième point d'appui bas et selon le premier sens, et une quatrième force de réaction ayant une composante radiale selon le deuxième sens inverse au premier sens sur la première poutre au niveau du premier point d'appui haut.

Selon un mode de réalisation, les poutres sont configurées et les éléments de liaison relient les poutres les unes aux autres de sorte que la structure se trouve dans une configuration montée dans laquelle :
- le polygone convexe est régulier,
- des projections des premières extrémités basses des poutres sur le premier plan sont situées sur un même cercle de centre situé au centre du polygone.

Selon un mode de réalisation, les poutres présentent sensiblement une même longueur. Selon un exemple, la structure portante est caractérisée en ce qu'une première distance séparant le premier point d'appui haut de la première extrémité basse d'une poutre est sensiblement égale à une deuxième distance séparant le deuxième point d'appui de la deuxième extrémité haute de ladite poutre et est sensiblement égale au tiers de la longueur de la poutre.

Selon un mode de réalisation, les deuxièmes points d'appui bas comprennent des points appartenant à un même deuxième plan sensiblement parallèle au premier plan, et dans laquelle le premier plan est sensiblement perpendiculaire à la force de gravitation.

Selon un mode de réalisation, au moins un des éléments de liaison se trouve dans une première configuration dans laquelle il autorise trois degrés de liberté en rotation entre une poutre de l'ensemble et soit :
- la première poutre adjacente à ladite poutre soit,
- la deuxième poutre adjacente à ladite poutre.

Selon un mode de réalisation, au moins un des éléments de liaison se trouve dans une deuxième configuration dans laquelle il autorise deux degrés de liberté en translation entre une poutre de l'ensemble et soit :
- la première poutre adjacente, et selon les axes longitudinaux respectifs de ladite poutre et de ladite première poutre adjacente, soit
- la deuxième poutre adjacente, et selon les axes longitudinaux respectifs de ladite poutre et de ladite deuxième poutre adjacente.

Selon un autre aspect, l'invention concerne un kit de montage d'une structure portante autoporteuse selon l'invention comprenant :
- l'ensemble d'au moins six poutres, les longueurs des poutres étant comprises entre 0,5 mètres et 6 mètres, les premières extrémités basses des poutres étant usinées de sorte que, dans la configuration montée, les poutres présentent un unique point d'appui, ou une unique surface d'appui, sur le support en leurs premières extrémités basses ;
- les éléments de liaison, lesdits éléments de liaison étant aptes à relier les poutres entre elles de sorte que la structure portante autoporteuse soit apte à être dans la configuration montée.

Selon un autre aspect, l'invention concerne un habitat, un habitacle, un jouet, un agrès, un meuble, un châssis, une plateforme, une structure de jeux, ou un chapiteau comprenant une structure portante autoporteuse selon l'invention.

Selon un exemple, chaque zone d'appui entre deux poutres comprend des moyens de liaison bloquant les degrés de liberté d'une poutre vis-à-vis de l'autre poutre. Ce moyen de liaison peut être un élément extérieur aux poutres, tel qu'une corde, ou un élément de conception d'une ou des poutres tels qu'un usinage permettant un encastrement d'une poutre dans l'autre poutre. Selon un mode de réalisation, le moyen de liaison peut être une combinaison d'un moyen externe et d'un moyen de conception. Un intérêt est de permettre de supporter, par la structure, un poids agencé dans un plan horizontal et soutenu par ladite structure tout en évitant un glissement ou une déformation de ladite structure.

### Brève description des figures

D'autres caractéristiques et avantages de l'invention ressortiront à la lecture de la description détaillée qui suit, en référence aux figures annexées, qui illustrent :
Fig. 1 : à gauche, une vue de dessus d'un exemple d'une structure selon un mode de l'invention comprenant six poutres entrecroisées, dans la configuration montée et, à droite, une vue des projections des points d'appui des poutres sur le premier plan.
Fig. 2 : à gauche, une vue de dessus de la structure de la figure 1 dans la configuration montée sur laquelle on a représenté un cercle sur lequel sont projetées les extrémités inférieures et, à droite, une vue des projections des extrémités inférieures des poutres sur le premier plan.
Fig.3 : une vue en perspective de la structure des figures 1 et 2 sur laquelle les points d'appui sont représentés en noir.
Fig.4 : une vue en perspective de la structure des figures 1 et 3 sur laquelle les points d'appui sont représentés en noir sur laquelle sont représentés des axes des degrés de liberté en rotation et en translation au niveau des points d'appui.
Fig.5 : une représentation schématique d'un habitat dont la charpente est un deuxième exemple de structure selon un mode de l'invention lorsqu'elle est mise en œuvre pour la réalisation d'une structure d'habitat.
Fig.6 : une représentation schématique d'un meuble dont la structure est une structure selon le premier exemple des figures 1 à 4.
Fig.7 : Une vue de plusieurs structures selon divers modes de réalisation de l'invention agencées entre elles et dont les points d'appui hauts respectifs forment des polygones.
Fig.8 : Une vue de plusieurs structures modulaires obtenues par l'association de plusieurs structures de l'invention dans des modes de réalisation où elles forment des portiques de jeu de grimpes.
Fig.9 : Une vue d'une structure de l'invention dans un mode de réalisation où elle comprend un ensemble de six poutres formant trois portiques et trois sous-portiques.

### Description détaillée de l'invention

L'invention se rapporte à une structure autoporteuse et portante comportant un ensemble de N poutres, N étant pair et supérieur ou égal à six.

### Définitions

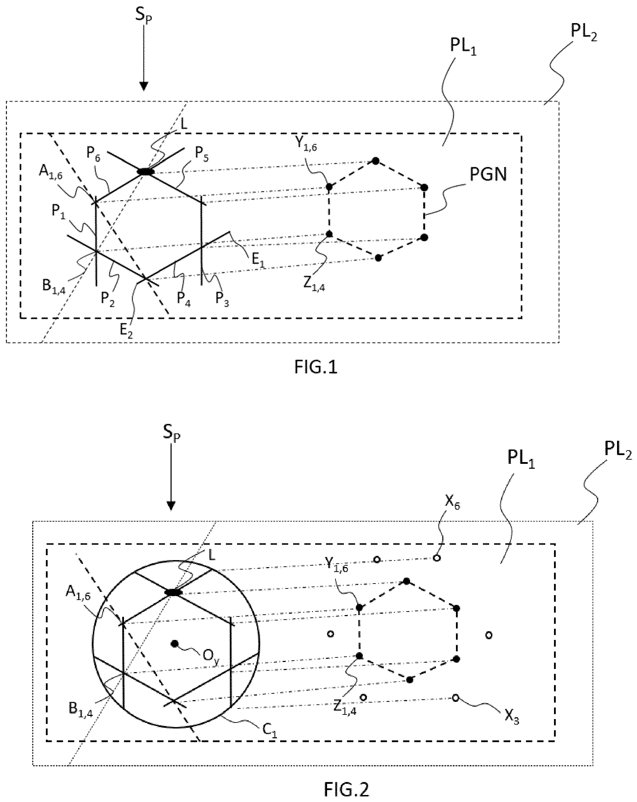

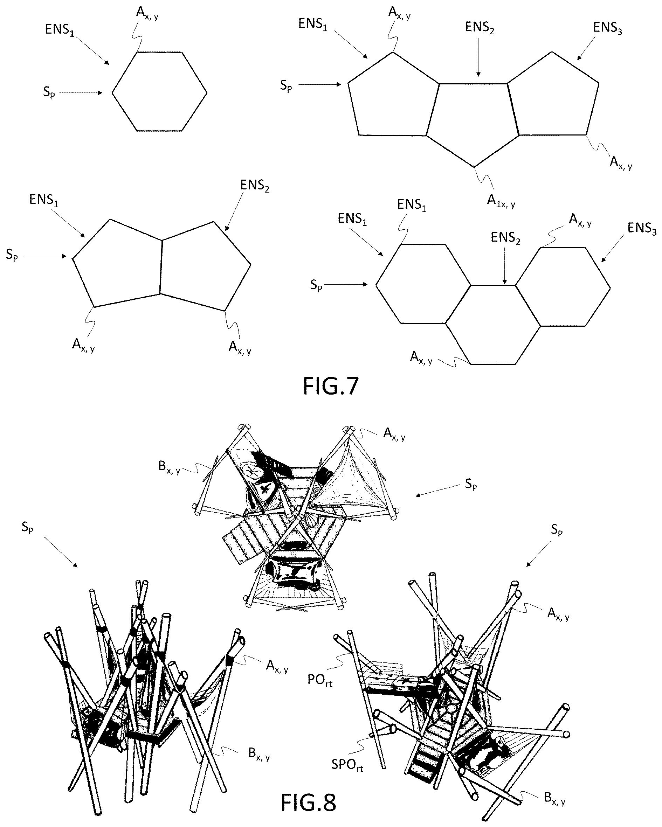

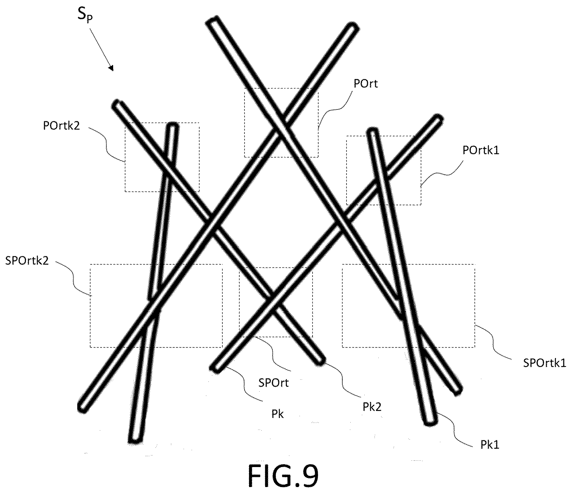

Dans la suite de la description :
- On désigne indifféremment la structure autoporteuse S_{P} de l'invention par les termes « structure autoporteuse S_{P} », « structure porteuse S_{P} » ou encore « structure S_{P} » pour faire référence à la même structure S_{P}.
- On appelle « poutre » une pièce rectiligne allongée rectilignement selon un axe longitudinal de la poutre présentant une longueur donnée selon l'axe longitudinal, et utilisée pour l'assemblage de la structure S_{P}. Les « poutres » composant la structure S_{P} ne se limitent pas aux poutres en bois, mais à des pièces rectilignes pouvant être faites de toute sorte de matériaux. Par ailleurs, la structure S_{P} s'applique à des domaines divers allant de la construction d'habitat(s) à la conception de meubles. Ainsi, on désignera par le même terme « poutre » les pièces rectilignes formant la structure de l'invention, quelles que soient leurs dimensions, les matériaux les composants et quel que soit le domaine d'application.
- On désigne des « points d'appui hauts » A₁, Aₓ pour faire référence aux points d'appui entre deux poutres P_{K} se trouvant à l'altitude la plus élevée, suivant un axe vertical O_{y} passant par un centre de la structure S_{P}, lorsque la structure S_{P} se trouve dans une configuration montée.
- Réciproquement, on désigne des « points d'appui bas » B_{x, y} pour faire référence aux points d'appui se trouvant à une altitude inférieure aux points d'appui hauts, suivant l'axe vertical O_{y}, lorsque la structure est dans une configuration montée.
- On considère l'altitude des points d'appui en prenant pour référence le support sur lequel la structure est montée, c'est-à-dire la surface avec laquelle sont en contact des extrémités inférieures des poutres, dites « premières extrémités basses E₁ », selon l'axe vertical O_{y}.
- On entend par premiers points d'appui hauts A_{x, y} et deuxièmes points d'appui bas B_{x, y} des zones d'appui entre les poutres, une même zone d'appui pouvant comprendre une pluralité de points d'appui.
- D'une manière générale, dans la présente invention, on entend par un « point d'appui » entre deux poutres, une « zone d'appui » formant une surface de contact entre les deux poutres. Cette surface de contact peut être plane en 2D ou peut être une surface complexe formant plusieurs plans sécants lorsqu'un usinage est prévu pour encastrer une poutre dans une autre poutre, par exemple par un assemblage en mi-bois entre deux poutres.
- On définit l'axe vertical O_{y} comme un axe sensiblement parallèle à la force de gravitation et passant par le centre de la structure, par exemple passant par le centre du cercle C₁ dans le cas où les premières extrémités E₁ appartiennent à un même cercle comme illustré en figure 2. Par plan horizontal, on désigne un plan perpendiculaire à la force de gravitation.
- Les points d'appui hauts sont désignés par le terme « premiers points d'appui hauts A_{x,y} » et les points d'appui bas sont désignés par le terme « deuxièmes points d'appui bas B_{x,y} ». Sur la figure 1, seuls les points d'appui A_{1,6} et B_{1,4} sont références pour plus de clarté.
- Les indices « x,y » visent à désigner les poutres présentant le point d'appui considéré. Par exemple, le premier point d'appui A_{1,2} désigne un point d'appui haut entre les poutres 1 et 2.
- On considère dans la présente description que les points d'appui A_{x, y}, B_{x, y} sont équivalents aux points d'appui A_{y, x}, B_{y, x}. Ces points d'appui visent chacun à désigner une position à laquelle les poutres Pₖ de la structure Sₚ présentent le point d'appui considéré ou une zone d'appui locale autour de ce point d'appui.
- On désigne pour chaque poutre P_{K}, une « première poutre adjacente » Pₖ₁ et une « deuxième poutre adjacente » Pₖ₂.
- Chaque poutre P_{K} de la structure croise la première poutre adjacente Pₖ₁ en un premier point d'appui A_{x, y} et la deuxième poutre adjacente Pₖ₂ en un deuxième point d'appui B_{x, y}. Ainsi, chaque poutre Pₖ forme un portique avec la première poutre adjacente Pₖ₁ et un sous-portique avec la deuxième poutre adjacente Pₖ₂. On comprend par cette formulation qu'on fait référence à « la première poutre adjacente Pₖ₁ à ladite poutre Pₖ », et la « deuxième poutre adjacente Pₖ₂ à ladite poutre Pₖ ».
- On comprend donc que la désignation d'une poutre de la structure comme « première poutre adjacente » Pₖ₁ ou « deuxième poutre adjacente » Pₖ₂ dans la présente description dépend de la poutre P_{K} prise pour référence.
- On comprend également que chaque poutre P_{K} de la structure S_{P} fait à la fois partie d'un portique et à la fois partie d'un sous-portique.
- On désigne par le terme « portique » une paire de poutres P_{K} se croisant en un premier point d'appui haut A_{x, y}.
- On désigne par le terme « sous-portique » une paire de poutres P_{K} se croisant en un deuxième point d'appui bas B_{x, y}.
- Ainsi, une poutre donnée Pₖ et sa première poutre adjacente Pₖ₁ forme un portique, une poutre donnée Pₖ forme un sous portique avec sa deuxième poutre adjacente Pₖ₂.
- On désigne des sous-portiques adjacents SPO_{rtk1,} SPO_{rtk2,} à un portique donné POᵣₜ pour désigner des sous-portiques comprenant chacun une poutre en commun avec ledit portique POᵣₜ.
- On désigne des portiques adjacents POᵣₜₖ₁, POᵣₜₖ₂, à un sous-portique donné SPOᵣₜ pour désigner des portiques comprenant une poutre en commun avec ledit sous-portique.
- Dans la structure de l'invention, chaque portique POᵣₜ comprend donc deux sous-portiques adjacents SPOᵣₜₖ₁, SPOᵣₜₖ₂, , et chaque sous-portique SPOᵣₜ comprend deux portiques POᵣₜₖ₁, POᵣₜₖ₂ adjacents.
- En référence à la figure 9, chaque poutre P_{K} de la structure croise la première poutre adjacente Pk₁ en un premier point d'appui haut A_{x, y} et croise la deuxième poutre adjacente Pk₂ en un deuxième point d'appui bas B_{x, y}. Chaque poutre Pₖ forme un portique POᵣₜ avec la première poutre adjacente Pk₁, et forme un sous-portique SPOᵣₜ avec la deuxième poutre adjacente Pk₂. Ainsi, on différencie la première poutre adjacente Pk₁ et la deuxième poutre adjacente Pₖ₂ à une poutre P_{K} donnée en ce que la première poutre adjacente Pk₁ présente le premier point d'appui haut A_{x, y} avec ladite poutre Pₖ, et en ce que la deuxième poutre adjacente Pk₂ présente le deuxième point d'appui bas B_{x, y} avec ladite poutre Pₖ.
- On comprend donc que la désignation d'une poutre de la structure comme « poutre adjacente » dans la présente description dépend de la poutre P_{K} prise pour référence.
- On comprend également que chaque poutre P_{K} de la structure S_{P} fait à la fois partie d'un portique POᵣₜ et à la fois partie d'un sous-portique SPOᵣₜ.
- On désigne un « polygone convexe » pour faire référence à un polygone dans lequel tout segment joignant deux sommets du polygone est inclus dans la composante fermée bornée par les côtés du polygone.
- On désigne par « module » une structure selon l'invention. Plusieurs modules sont susceptibles d'être associés dans le cadre de l'invention pour former une structure complexe. On désignera également une telle structure complexe par le terme « structure modulaire ».
- Dans le cadre de l'invention, les propriétés d'autoportance, de résistance aux efforts (compression, traction, cisaillement, torsion, etc...) sont inhérentes à un module. Toutefois, pour des cas plus complexes, par exemple pour renforcer encore davantage cette résistance aux efforts, ou encore pour augmenter le volume intérieur de la structure, ou tout simplement pour respecter un cahier des charges visant à obtenir une structure spécifique avec un volume ou une forme spécifique(s), par exemple une maison, plusieurs modules sont susceptibles d'être associés. Un tel cas est notamment illustré sur la figure 8, qui décrit des structures complexes composées de plusieurs modules selon l'invention pour former des structures de jeux de grimpes. Dans le cas de structures complexes comprenant une pluralité de modules, les poutres P_{K} sont susceptibles de croiser d'autres poutres en un nombre de points d'appui supérieur à deux. En revanche, cette caractéristique n'est pas nécessaire pour obtenir les avantages inhérents à l'invention (structure porteuse, autoporteuse, résistante aux efforts, permettant d'obtenir un grand volume intérieur avec un minimum de matière tout en étant respectueuse de l'environnement).

La description de la présente invention s'appuie sur plusieurs modes de réalisation décrivant des déclinaisons possibles de la structure portante autoporteuse S_{P} de l'invention.

Des variantes de réalisation sont décrites dans chacun de ces modes de réalisation, et peuvent s'appliquer à tous les modes de réalisation. Ainsi, les caractéristiques décrites pour un mode de réalisation sont applicables à un autre mode de réalisation. L'invention protège les différentes combinaisons de caractéristiques décrites au travers de ces divers modes de réalisation.

### Configuration et dimensions des poutres

La figure 1 illustre, à gauche, une vue de dessus de la structure autoporteuse S_{P} selon un premier exemple. La structure autoporteuse S_{P} se trouve dans une configuration montée et comporte un ensemble ENS₁ de six poutres Pₖ (P₁, P₂, P₃, P₄, P₅, P₆, ...).

Cet ensemble ENS₁ de six poutres P_{K} comporte trois sous-ensembles de deux poutres P_{K} formant trois portiques POᵣₜ et trois sous-ensembles de poutres P_{K} formant trois sous-portiques SPOᵣₜ. Cette représentation permet de comprendre que chaque poutre P_{K} de l'ensemble ENS₁ fait partie à la fois d'un portique POᵣₜ et fait à la fois partie d'un sous-portique SPOᵣₜ.

Dans un mode de réalisation, la longueur de chacune des poutres Pₖ est comprise entre 0,5 mètres et 1 mètres.

Cette configuration est avantageuse pour la réalisation de certains meubles, tels que des tabourets ou des tables basses.

Dans un mode de réalisation, la longueur de chacune des poutres P_{K} de la structure S_{P} est de 6 mètres maximum.

Un avantage est de permettre à une personne seule de monter la structure S_{P} par elle-même.

Selon un autre mode de réalisation, la longueur des poutres Pₖ est comprise entre 1 mètre et 2 mètres.

Selon un mode de réalisation, la longueur des poutres Pₖ est comprise entre 6 mètres et 10 mètres.

Un avantage est de permettre l'utilisation de la structure Sₚ de l'invention à des fins de structure habitable ou de lieu collectif.

L'invention ne se limite pas à des dimensions de poutres Pₖ particulières. Les dimensions des poutres Pₖ seront notamment déterminées en fonction des cas d'usage.

Selon un mode de réalisation, le poids des poutres Pₖ est compris entre 5kg et 10kg. Dans ce cas, les poutres Pₖ sont par exemple des poutres en bois. Un avantage est d'utiliser des poutres Pₖ dont le poids permet le montage de la structure par une personne seule.

L'invention ne se limite pas à un poids de poutre particulier. Le poids des poutres est sensiblement corrélé au matériau utilisé, à la longueur et au diamètre des poutres.

Différentes formes de poutres Pₖ peuvent être mises en œuvre dans la structure portante Sₚ de l'invention. Selon divers exemples, la structure Sₚ comprend des poutres dont le profilé est rectangulaire ou en forme de « T » ou encore des poutres dont le profilé est en forme de « I » ou circulaire, voire légèrement ovale. Certains profilés de poutre peuvent être usinés de manière à obtenir un profilé comportant des portions courbes et des portions droites. Au niveau des points d'appui ou des zones d'appui, les profilés des poutres peuvent, dans certains modes de réalisation, avoir une surface usinée de sorte à faire coopérer deux poutres entre elles. La coopération peut résulter en une surface de contact optimisée pour répartir les efforts d'action et de réaction d'une poutre vers l'autre et réciproquement. L'invention ne se limite pas à une forme particulière de poutre. Les formes des poutres seront déterminées en fonction des cas d'usage.

Selon divers exemples, les poutres Pₖ de la structure comprennent des poutres continues, des poutres pleines, des poutres composées, des poutres caisson.

Optionnellement, au moins une poutre Pₖ est une pièce non usinée. La poutre Pₖ comprend par exemple d'une partie d'un arbre brisé, sous l'effet d'actions naturelles (volis), ou non-naturelles (par exemple par une action de l'homme). Il s'agit par exemple d'une branche d'un arbre, volontairement soustraite à l'arbre par une action humaine, ou soustraite par cause naturelle (par exemple météorologique).

Selon un mode de réalisation, les poutres Pₖ de la structure Sₚ sont traitées contre l'humidité. Un tel traitement est par exemple mis en œuvre quand les poutres Pₖ de la structure Sₚ sont des poutres en bois.

Un avantage est d'améliorer les propriétés hydrofuges des poutres. Un autre avantage est de réduire les pertes de matière en surface résultant de l'action de l'eau sur le bois. Un autre avantage est de réduire les cycles de maintenance et d'entretien de la structure Sₚ.

Chaque poutre Pₖ de l'ensemble ENS₁ comporte une première extrémité E₁ basse et une deuxième extrémité E₂ haute. Les premières extrémités E₁ basses correspondent aux extrémités en contact avec un support, par exemple un sol horizontal, lorsque la structure est dans la configuration montée. Les deuxièmes extrémités hautes E₂ correspondent aux extrémités positionnées à des altitudes supérieures à celles des premières extrémités basses E₁ par rapport au support, lorsque la structure est dans la configuration montée.

Selon un mode de réalisation, les premières extrémités basses E₁ des poutres Pₖ sont usinées. L'usinage est par exemple réalisé de sorte à définir un unique point d'appui, ou une unique zone d'appui, de la première extrémité basse E₁ de la poutre Pₖ sur le support Sₚ. Les poutres Pₖ sont par exemple usinées pour définir une forme arrondie des premières extrémités basses E₁.

Un avantage est de réduire localement le volume des poutres P_{K}. Un autre avantage est d'améliorer l'emprise au sol des poutres P_{k.} Un autre avantage est d'améliorer la stabilité de la structure Sₚ.

Selon un mode de réalisation, les premières extrémités basses E₁ comprennent un embout. L'embout constitue une garniture de protection des premières extrémités basses E₁. L'embout couvre par exemple la poutre Pₖ depuis les premières extrémités basses E₁ sur 1/20 ^{ème} de la longueur de la poutre Pₖ. Des dimensions d'embout différentes peuvent être choisies en fonction des cas d'usage. L'embout est par exemple un embout en caoutchouc. D'autres matériaux peuvent être choisis en fonction des cas d'usage. Un avantage est de protéger localement les poutres Pₖ de la structure Sₚ. Un autre avantage est d'améliorer l'emprise au sol de la structure Sₚ. Un autre avantage est d'éviter le glissement des premières extrémités basses E₁ des poutres sur le support.

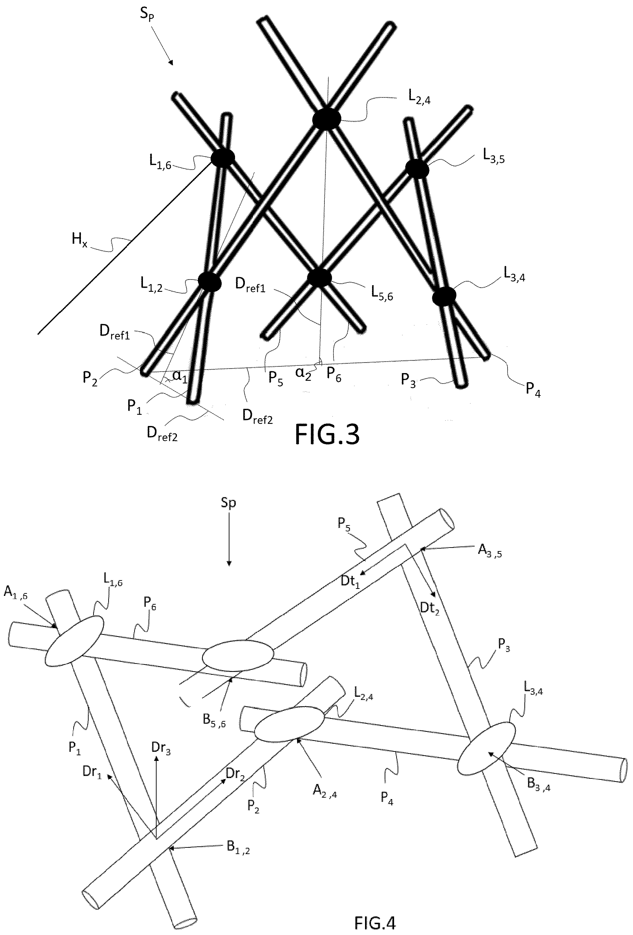

Dans la suite de la description, en référence à la figure 3, on entend par « un angle d'inclinaison par rapport au sol d'un portique POᵣₜ ou d'un sous-portique SPOᵣₜ », un angle entre :
▪ une première droite de référence D_{ref1} passant par le premier point d'appui haut A_{x, y} entre les poutres du portique POᵣₜ ou le point d'appui bas B_{x, y} des poutres Pₖ formant le sous-portique SPOᵣₜ et coupant une deuxième droite de référence D_{ref2} reliant les premières extrémités basses E₁ des poutres Pₖ formant le portique POᵣₜ ou le sous-portique SPO_{rt,} et
▪ un plan parallèle au support et auquel appartient la deuxième droite de référence D_{ref2}.

Avantageusement, au moins un sous-portique SPOᵣₜ présente un premier angle d'inclinaison α₁ par rapport au sol, et orienté vers l'intérieur de la structure Sₚ, inférieur à 45°.

Avantageusement, au moins un sous-portique SPOᵣₜ présente un premier angle d'inclinaison α₁ par rapport au sol, et orienté vers l'intérieur de la structure Sₚ, inférieur à 90°.

Avantageusement, au moins un sous-portique SPOᵣₜ présente un premier angle d'inclinaison α₁ par rapport au sol, et orienté vers l'intérieur de la structure Sₚ, compris entre 45° et 70°.

Avantageusement, au moins un sous-portique SPOᵣₜ présente un premier angle d'inclinaison α₁ par rapport au sol, et orienté vers l'intérieur de la structure Sₚ, compris entre 70° et 90°.

La mesure du premier angle d'inclinaison α₁ par rapport au sol et orienté vers l'intérieur de la structure Sₚ prend par exemple pour point de référence le deuxième point d'appui bas B_{x, y} du sous-portique SPOᵣₜ considéré.

Avantageusement, au moins un portique POᵣₜ présente un deuxième angle d'inclinaison α₂ par rapport au sol, et orienté vers l'extérieur de la structure Sₚ, inférieur à 45°.

Avantageusement, au moins un portique POᵣₜ présente un deuxième angle d'inclinaison α₂ par rapport au sol, et orienté vers l'extérieur de la structure Sₚ, inférieur à 90°.

Avantageusement, au moins un portique POᵣₜ présente un deuxième angle d'inclinaison α₂ par rapport au sol, et orienté vers l'extérieur de la structure Sₚ, compris entre 45° et 70°.

Avantageusement, au moins un portique POᵣₜ présente un deuxième angle d'inclinaison α₂ par rapport au sol, et orienté vers l'extérieur de la structure Sₚ, compris entre 70° et 90°.

La mesure du deuxième angle d'inclinaison α₂ par rapport au sol et orienté vers l'extérieur de la structure Sₚ prend par exemple pour point de référence le premier point d'appui haut A_{x, y} du portique POᵣₜ considéré.

Optionnellement, l'ensemble des sous-portiques SPOᵣₜ de la structure Sₚ présente un premier angle d'inclinaison α₁ par rapport au sol et orienté vers l'intérieur de la structure Sₚ égal.

Optionnellement, l'ensemble des portiques POᵣₜ de la structure Sₚ présente un deuxième angle d'inclinaison α₂ par rapport au sol et orienté vers l'intérieur de la structure Sₚ égal.

Optionnellement, le premier angle d'inclinaison α₁ d'au moins un sous-portique SPOᵣₜ est inférieur au premier angle d'inclinaison α₁ d'au moins un autre sous-portique SPOᵣₜ.

Optionnellement, le deuxième angle d'inclinaison α₂ d'au moins un portique POᵣₜ est inférieur au deuxième angle d'inclinaison α₂ d'au moins un autre portique POᵣₜ.

Optionnellement, les angles entre les poutres Pₖ et leur première poutre adjacente respective Pₖ₁ sont inégaux le long de la structure Sₚ.

Un avantage est que deux couples de poutres de deux portiques présentant des angles inégaux au niveau des premiers points d'appui hauts A_{x, y} ne se toucheront jamais en cas d'extension des poutres au-delà desdits premiers points d'appui hauts A_{x, y}. Cette configuration est avantageuse par exemple pour constituer des points d'appui aptes à supporter un toit monopan.

Optionnellement, les angles entre les poutres Pₖ et leur première poutre adjacente Pₖ₁ respective sont tous égaux.

Optionnellement, au moins deux angles entre une première poutre Pₖ et sa première poutre adjacente respective, et entre une deuxième poutre Pₖ et sa première poutre adjacente respective sont inégaux.

### Matériaux constituant les poutres

Selon un mode de réalisation, l'ensemble de poutres ENS₁ comprend des poutres Pₖ en bois. Les essences de bois constituant les poutres peuvent comprendre, et à titre non limitatif, du chêne, de l'orme, du sapin, de l'épicéa, du mélèze, du pin.

Le choix de l'essence de bois dépend notamment du cas d'usage. Un avantage de pouvoir utiliser différentes essences de bois pour les poutres est de pouvoir tenir compte des disponibilités en approvisionnement selon les régions. Un autre avantage particulier à l'utilisation de bois est de construire des structures légères et peu coûteuses, par exemple par rapport à des constructions en béton. Un autre avantage est d'utiliser un matériau écologique et facilement disponible.

Selon un mode de réalisation, l'ensemble de poutres ENS₁ comprend des poutres Pₖ en bambou. Un avantage est d'utiliser un matériau facile à cultiver comprenant de bonnes valeurs de résistance. Un autre avantage du bambou se trouve dans son élasticité et son faible poids.

Un autre avantage du bambou provient de sa capacité à fixer le CO_{2.} Un autre avantage est que la culture de bambou nécessite peu d'engrais et peu d'utilisation de produits phytosanitaires. Ainsi, le bambou présente des caractéristiques à la fois intéressantes sur le plan technique et sur le plan écologique.

Un autre avantage du bambou provient de ses résistances en traction et en compression.

Un autre avantage du bambou provient de ses propriétés d'absorption thermiques, acoustiques et vibratoires.

D'autres matériaux sont susceptibles de composer les poutres P_{K} de la structure S_{P}, tels que par exemple, et à titre non limitatif, un alliage métallique tel que de l'acier ou encore un matériau composite.

Le choix du matériau est notamment lié à la fonction et aux dimensions de la structure Sₚ, ainsi qu'aux contraintes environnementales et aux contraintes de terrain, notamment du support sur lequel sera apposé la structure S_{P}.

### Premiers et deuxièmes points d'appui

Chaque poutre Pₖ de l'ensemble ENS₁ croise la première poutre adjacente Pk₁ en un premier point d'appui haut A_{x, y} et croise la deuxième poutre adjacente Pk₂ en un deuxième point d'appui bas B _{x, y}.

Un avantage de cette configuration est de définir un volume intérieur de la structure S_{P} délimité par les poutres Pₖ entrecroisées.

Par exemple, la poutre P₃ croise la première poutre adjacente P₅ en un premier point d'appui A_{3,5} et croise la deuxième poutre adjacente P₄ en un deuxième point d'appui B _{3,4}.

Les poutres Pk entrecroisées matérialisent une boucle fermée formée par une ligne passant par le premier point d'appui hauts A_{x, y} entre une poutre Pₖ et la première poutre adjacente Pk₁, et rejoignant le deuxième point d'appui bas B_{x, y} entre ladite poutre Pₖ et la deuxième poutre adjacente Pk₂, et ainsi de suite en suivant l'axe des poutres Pₖ de la structure Sₚ jusqu'à revenir au premier point d'appui haut A_{x, y} initial. Ainsi, les poutres Pₖ entrecroisées délimitent un volume partiellement fermé dont les frontières sont matérialisées par lesdites poutres Pₖ de la structure Sₚ.

Les premiers points d'appui hauts A_{x, y,} et les deuxièmes points d'appui bas B_{x, y} sont distants des extrémités E₁, E₂ des poutres Pₖ, de sorte qu'il existe des extensions de chacune des poutres Pₖ de l'ensemble ENS₁ au-delà desdits premiers points d'appui hauts A_{x, y} et deuxièmes points d'appui bas B_{x, y.}

Dans un mode de réalisation, les poutres Pₖ sont configurées et les éléments de liaison L_{x, y} relient les poutres Pₖ de sorte que, dans la configuration montée sur un support sensiblement horizontal, au moins trois premiers points d'appui hauts A_{x, y,} sont situés dans un même premier plan PL₁ sensiblement perpendiculaire à l'axe O_{y,} et au moins trois deuxièmes points d'appui bas B_{x, y} sont situés dans un même deuxième plan PL₂ sensiblement parallèle au premier plan PL₁. Par exemple, dans ce cas, tous les premiers points d'appui hauts A_{x, y} sont situés à une même distance des deuxièmes extrémités hautes E_{2,} et/ou tous les deuxièmes points d'appui bas B_{x, y} sont situés à la même distance des premières extrémités basses E₁, et les poutres sont identiques.

Dans un mode de réalisation, les poutres Pₖ sont configurées et les éléments de liaison L_{x, y} relient les poutres Pₖ de sorte que, dans la configuration montée, la structure S_{P} comprend au moins quatre portiques PO_{rt,} et au moins un premier point d'appui haut A_{x, y} d'une poutre P_{K} sur la première poutre adjacente Pₖ₁ se trouve en dehors du premier plan PL₁ formé par au moins trois autres premiers points d'appui hauts A_{x, y}.

Cette configuration est par exemple rendue possible lorsqu'un des portiques POᵣₜ comprend des poutres plus grandes que celles des autres portiques de la structure.

Un avantage est de pouvoir monter la structure S_{P} sur un support présentant des variations d'altitudes.

Dans un mode de réalisation, les poutres Pₖ sont configurées et les éléments de liaison L_{x, y} relient les poutres Pₖ de sorte que, dans la configuration où la structure Sₚ est montée sur un support horizontal, des projections Y_{x,y} des premiers points d'appui hauts Aₓ, y sur le premier plan PL₁ appartiennent à un même cercle dont le centre appartient à l'axe O_{y}.

Cette configuration est par exemple rendue possible dans une configuration dans laquelle tous les premiers points d'appui hauts A_{x, y} sont situés à une même distance des deuxième extrémités hautes E_{2,} et/ou tous les deuxièmes points d'appui bas B_{x, y} sont situés à la même distance des premières extrémités basses E₁, les poutres Pₖ sont identiques et forment les mêmes angles entre elles au niveau des premiers points d'appui hauts A_{x, y}. Dans ce cas, le polygone convexe est régulier.

Dans un mode de réalisation, les projections Y_{x, y} des premiers points d'appui hauts A_{x, y} et les projections Z_{x, y} des deuxièmes points d'appui bas sont des projections orthogonales.

Optionnellement, les projections Y_{x, y} du point d'appui haut A_{x, y} et les projections Z_{x, y} du point d'appui bas B_{x, y} de chaque poutre Pₖ sur le premier plan PL₁ forment les extrémités d'un côté du polygone convexe PGN.

Ce cas est particulièrement avantageux pour ce qui est de l'augmentation du volume intérieur de la structure S_{P}. En effet, ce cas illustre qu'aucune poutre ne passe « à travers le volume intérieur de la structure » (par exemple pour croiser une poutre symétriquement opposée, ou sensiblement symétriquement opposée, ou diamétralement opposée, ou sensiblement diamétralement opposée, ou encore pour croiser toute autre poutre avec laquelle la projection orthogonale du point d'appui sur le premier plan formerait une extrémité d'une diagonale du polygone, c'est-à-dire une extrémité d'un segment reliant deux sommets du polygone autre qu'un côté), ce qui permet de libérer l'espace à l'intérieur du volume délimité par les portiques et les sous-portiques.

Optionnellement, les poutres Pₖ sont configurées de sorte que, dans la position montée, les projections des points d'appui d'une poutre Pₖ donnée avec deux autres poutres ne comprennent pas, ni ne coupent l'un des apothèmes du polygone convexe PGN.

Cela revient à dire qu'aucune poutre Pₖ ne passe « à travers le volume intérieur de la structure », de sorte qu'avantageusement, le volume intérieur de la structure est optimisé.

Dans un mode de réalisation, les poutres Pₖ sont configurées et les éléments de liaison L_{x, y} relient les poutres Pₖ de sorte que, dans la configuration montée, des projections Z_{x,y} des deuxièmes points d'appui bas B_{x, y} sur le premier plan PL₁ appartiennent à un même cercle dont le centre appartient à l'axe O_{y}.

Dans un mode de réalisation, les poutres Pₖ sont configurées et les éléments de liaison L_{x, y} relient les poutres Pₖ de sorte que, dans la configuration montée, les projections Y_{x, y,} Z_{x, y} des premiers points d'appui hauts A_{x, y,} et des deuxièmes points d'appui bas B_{x, y} sur le premier plan PL₁ appartiennent à un même cercle dont le centre appartient à l'axe O_{y}.

Dans un mode de réalisation, les poutres Pₖ sont configurées et les éléments de liaison L_{x, y} relient les poutres Pₖ de sorte que, dans la configuration montée, les projections Y_{x, y,} Z_{x, y} des premiers points d'appui hauts A_{x, y,} , et des deuxièmes points d'appui bas B_{x, y} sur le premier plan PL₁ appartiennent respectivement à des cercles différents et concentriques dont le centre appartient à l'axe O_{y}.

Cette configuration est avantageuse pour la mise en œuvre de la structure S_{P} dans des cas particuliers, tels que par exemple pour la conception de tabourets, ou encore pour la conception d'une structure de trampoline.

Dans un mode de réalisation, la distance entre le premier point d'appui haut A_{x, y} et la deuxième extrémité haute E₂ de chaque poutre Pₖ est réduite. La distance entre le premier point d'appui haut A_{x, y} et la deuxième extrémité haute E₂ de la poutre Pₖ est par exemple inférieure à 1/10^{ème} de la longueur d'une poutre Pₖ.

Cette configuration est avantageuse pour assurer la sécurité d'un utilisateur lorsque la structure S_{P} est mise en œuvre comme structure de trampoline.

Dans un mode de réalisation, les premiers points d'appui hauts A_{x, y} et deuxièmes points d'appui bas B_{x, y} de chaque poutre Pₖ sont séparés, selon l'axe longitudinal de la poutre Pₖ, par une distance sensiblement égale à un tiers de la longueur de chaque poutre P_{K}.

Un avantage est de limiter la distance entre les premiers et deuxièmes points d'appui des poutres P_{K}. De cette manière, la résistance aux efforts de compression de chaque poutre P_{K} est avantageusement importante.

Un avantage est de permettre une stabilité optimale de la structure S_{P}.

La structure S_{P} est avantageusement apte à être montée sur tout type de support tel que par exemple, à titre non limitatif, sur du béton, sur un carrelage, sur du sable, sur un parquet, ou encore sur un sol d'herbe.

Dans un mode de réalisation dans lequel la structure Sₚ est montée sur un support horizontal, les deuxièmes points d'appui bas B_{x, y} appartiennent à un même deuxième plan PL₂ sensiblement parallèle au premier plan PL₁ contenant les premiers points d'appui, et le premier plan PL₁ est sensiblement horizontal.

### Entrecroisements des poutres

Comme visible sur la figure 2, les projections X_{y} des premières extrémités basses E₁ des poutres Pₖ, dont seules X_{3 et} X₆ sont référencées sur la figure 2, se trouvent en dehors du polygone convexe PGN formé par les segments reliant les projections X_{x, y} des premiers points d'appui hauts A_{x, y,} et les projections Z_{x, y} des deuxièmes points d'appui bas B_{x, y} sur le premier plan PL₁.

La convexité du polygone projeté sur le plan PL₁ illustre le déport incliné vers l'extérieur des portiques de la structure S_{P}.

On entend par « vers l'extérieur » un sens opposé au sens dirigé vers l'axe O_{y} de la structure S_{P}. Réciproquement, on entendra par « vers l'intérieur » un sens dirigé vers l'axe O_{y}.

Ce déport incliné de chaque portique vers l'extérieur entraîne avantageusement un déport incliné de chaque sous-portique vers l'intérieur.

Cette réciprocité des inclinaisons des portiques et des sous-portiques résulte de l'entrecroisement alternatif des poutres Pₖ décrit précédemment.

Un avantage est d'obtenir une structure autoporteuse et portante présentant une résistance importante à la compression.

Un avantage d'une telle configuration est que l'entrecroisement alternatif des poutres P_{K} permet une prise en charge importante des efforts de compression. En effet, plus la structure S_{P} est chargée, plus les liens mécaniques entre les poutres P_{K} formant les portiques et les sous-portiques sont renforcés.

Le poids qui s'exerce sur la structure augmente la tension réciproque des rapports entre les poutres entrecroisées. En conséquence, l'ancrage au niveau des premières extrémités basses E₁, le maintien, et ainsi la stabilité de la structure sont améliorés.

Un autre avantage est que, plus la structure Sₚ est chargée, plus elle est ancrée au niveau des premières extrémités basses E₁. Ainsi, sa stabilité est renforcée.

Un autre avantage est que le déport incliné vers l'extérieur de chaque portique entraîne réciproquement un déport incliné vers l'intérieur de chaque sous-portique. Cette réciprocité des déports inclinés dans différents plans assure une auto-stabilisation de la structure S_{P} comme c'est le cas pour les structures réciproques.

Un autre avantage est que la réciprocité des rapports de tension au niveau des croisements des poutres maintient leur cohésion. Un autre avantage est de prévenir un basculement de la structure.

Dans un mode de réalisation, la structure Sₚ comprend au moins une poutre subsidiaire. La poutre subsidiaire croise par exemple une poutre Pₖ en appui avec une poutre adjacente au niveau d'un premier point d'appui haut A_{x, y}. Une telle poutre subsidiaire peut être désignée par le terme « arbalétrier » utilisé dans le domaine de la charpente.

Cette configuration est particulièrement avantageuse dans le cas de la réalisation d'une serre. Cette configuration permet de créer des pans inclinés sur lesquels pourront être apposés des panneaux transparents tels que des panneaux en polycarbonate.

Optionnellement, chaque poutre Pₖ de la structure S_{P} exerce des forces de réaction sur la première poutre adjacente Pₖ₁ et sur la deuxième poutre adjacente Pₖ₂ au niveau du premier point d'appui haut A_{x, y} et du deuxième point d'appui bas B_{x, y} de la poutre Pₖ.

Optionnellement, les poutres sont reliées entre elles de sorte que chaque poutre Pₖ est :
- Soit plus proche d'un axe vertical passant par un centre du polygone convexe que la première poutre adjacente Pk₁, au niveau du premier point d'appui haut A_{x, y}, et plus éloignée de l'axe vertical que la deuxième poutre adjacente Pk₂, au niveau du deuxième point d'appui bas B_{x, y} (disposition 1) ;
- Soit plus éloignée de l'axe vertical que la première poutre adjacente Pk₁, au niveau du premier point d'appui haut A_{x, y}, et plus proche de l'axe vertical que la deuxième poutre adjacente Pₖ₂ au niveau du deuxième point d'appui bas B_{x, y} (disposition 2).

Ainsi, lorsqu'une poutre Pₖ est dans la disposition 1, les deux poutres adjacentes à la poutre sont dans la disposition 2.

Ainsi, chaque poutre P_{K} exerce une force de réaction ayant une composante radiale par rapport à l'axe vertical O_{y} vers une de ses poutres adjacentes. Dans ce cas, chaque poutre P_{K} exerce également une force de réaction ayant une composante radiale selon un deuxième sens opposé au premier sens, sur son autre poutre adjacente.

Selon un mode de réalisation, chaque poutre P_{K} exerce une force de réaction ayant au moins une composante dirigée dans le sens de la force de gravitation et chaque poutre P_{K} exerce une force de réaction ayant au moins une composante dirigée dans le sens inverse au sens de la gravitation.

Cette répartition des forces illustre le fait que chaque poutre Pₖ est à la fois « support » de la première poutre adjacente Pk₁ et à la fois « supportée » par la deuxième poutre adjacente Pk₂, ou inversement.

Optionnellement, au moins une poutre Pₖ présente un nombre de points d'appui supérieur à deux. Il s'agit par exemple de points d'appui distincts des premiers points d'appui hauts A_{x, y} et des deuxièmes points d'appui bas B_{x, y}. La figure 8 illustre le cas de structures modulaires formant des supports de grimpe, dans lequel des poutres présentent un nombre de points d'appui supérieur à deux. Ce nombre de points d'appui supérieur à deux provient notamment de l'association de plusieurs modules entre eux. Dans les exemples illustrés en figure 8, chaque module est formé de trois portiques POᵣₜ et de trois sous-portiques SPOᵣₜ.

Un avantage est notamment de développer la structure en hauteur. Un autre avantage est d'augmenter la résistance de la structure aux torsions.

Selon un mode de réalisation, pour chaque poutre de la structure, lorsque la poutre est plus proche de l'axe vertical O_{y} que la première poutre adjacente au niveau du premier point d'appui et plus éloignée de l'axe vertical O_{y} que la deuxième poutre adjacente au niveau du deuxième point d'appui, alors la première poutre adjacente est plus proche de l'axe vertical au niveau du premier point d'appui que sa deuxième poutre adjacente respective au niveau de son premier point d'appui bas respectif, et la deuxième poutre adjacente est plus éloignée de l'axe vertical O_{y} que sa première poutre adjacente respective au niveau de son premier point d'appui haut respectif.

Ce cas illustre avantageusement l'entrecroisement alternatif des poutres le long de la structure, permettant de renforcer les propriétés porteuses et autoportantes de la structure.

### Nombre de poutres dans la structure

La figure 1 illustre également, à droite, des projections Y_{x, y} des premiers points d'appui hauts A_{x, y} et des projections Z_{x, y} des deuxièmes points d'appui bas B_{x, y} sur le premier plan PL₁. Ces projections forment les sommets d'un hexagone convexe.

On rappelle que l'effet technique recherché par l'invention est atteint avec un minimum de trois paires de poutres P_{K}, et que l'ajout de paires supplémentaires dépend uniquement des cas d'usage.

Dans des variantes de réalisation dans lesquelles des portiques POᵣₜ supplémentaires (ou sous-portiques SPOᵣₜ supplémentaires selon le point de vue) sont ajoutés à la structure S_{P}, des projections des premiers points d'appui hauts A_{x, y} et des deuxièmes points d'appui bas B_{x, y} forment également les sommets d'un polygone convexe présentant un nombre de côtés plus élevé.

À titre d'exemple, dans le cas de l'ajout d'un portique supplémentaire, c'est-à-dire de deux poutres Pₖ supplémentaires, les projections Y_{x, y} des premiers points d'appui hauts A_{x, y} et les projections des deuxièmes points d'appui bas B_{x, y} forment les sommets d'un octogone convexe. Cette même logique s'applique suivant le nombre de portiques POᵣₜ, ou paires de poutres P_{K}, ajoutés à la structure S_{P}.

Un intérêt particulier de l'ajout de portiques POᵣₜ supplémentaires se trouve notamment dans l'augmentation du volume intérieur de la structure S_{P}.

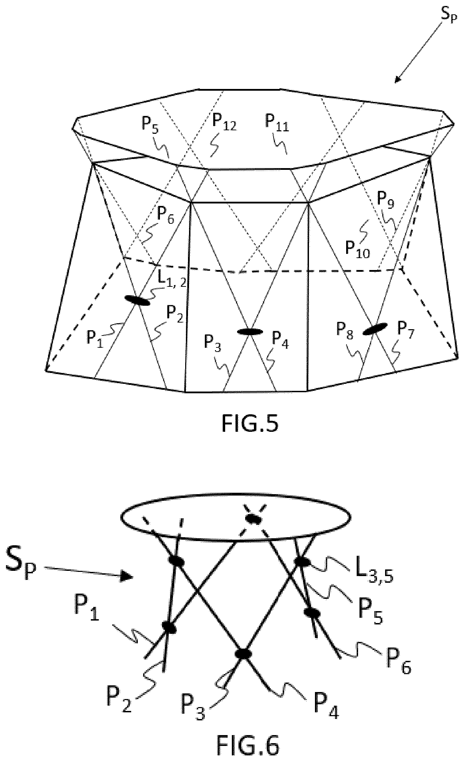

Par exemple, pour la conception d'une structure pour l'habitat, un grand volume intérieur est recherché. A cet effet, des portiques POᵣₜ supplémentaires sont intégrés à la structure S_{P}. La figure 5 illustre notamment un exemple de structure pour l'habitat comprenant un ensemble de douze poutres Pₖ.

Selon divers modes de réalisation, la structure Sₚ comprend plusieurs ensembles ENSₙ de N poutres Pₖ. La figure 7 illustre quatre cas d'exemple. La figure 7 illustre :
- en haut à gauche un cas où la structure S_{P} comprend un ensemble ENS₁ de douze poutres dont les croisements selon les points d'appui hauts A_{x, y} forment les sommets d'un hexagone,
- en bas à gauche un cas où la structure Sₚ comprend deux ensembles ENS₁, ENS₂ de dix poutres chacun, dont les croisements selon les points d'appui hauts A_{x, y} forment les sommets de deux pentagones composés entre eux,
- En haut à droite un cas où la structure Sₚ comprend trois ensembles ENS₁, ENS₂, ENS₃ de dix poutres chacun, dont les croisements selon les points d'appui hauts A_{x, y} forment les sommets de trois pentagones composés entre eux,
- En bas à droite un cas où la structure Sₚ comprend trois ensembles ENS₁, ENS₂, ENS₃ de douze poutres chacun, dont les croisements selon les points d'appui hauts A_{x, y} forment les sommets de trois hexagones composés entre eux.

Chaque ensemble correspond à un module, et l'association de ces ensembles entre eux forme une structure modulaire.

Un avantage est de combiner plusieurs ensembles autoportants entre eux pour aboutir à la réalisation d'une structure de volume important présentant une grande stabilité et une résistance importante aux efforts. Par exemple, la combinaison de trois pentagones entre eux, comme illustré sur l'exemple en haut à gauche de la figure 7, permet de définir un grand volume habitable, par exemple pour la réalisation d'un plain-pied.

Un autre avantage est de permettre un plus grand choix de volumes structurels tout en garantissant la stabilité de la structure finale.

Optionnellement, les projections des premiers points d'appui hauts A_{x, y} et les projections des premiers points d'appui bas B_{x, y} sur le premier plan PL₁ forment les sommets d'un polygone concave. Ces projections forment par exemple des sommets d'une forme en étoile.

Optionnellement, les modules associés pour former une structure complexe comprennent un nombre de portiques et de sous-portiques différents.

Un avantage est de pouvoir associer ensemble des modules dont les projections des premiers points d'appui hauts et/ou les projections des points d'appui bas sur le premier plan forment les sommets de formes différentes (par exemple les sommets d'un hexagone et d'un triangle).

Selon un mode de réalisation, au moins un ensemble ENSₙ de poutres Pₖ de la structure Sₚ se trouve à l'intérieur d'un périmètre délimité par les premières extrémités E₁ d'au moins un autre ensemble ENSₙ de poutres Pₖ. Dans cette configuration, les ensembles de poutres Pₖ ne sont plus adjacents les uns aux autres mais intégrés aux périmètres les uns des autres.

Un avantage est de former des structures modulaires à partir de modules intégrés les uns aux autres, pour renforcer l'autoportance des différents ensembles ainsi que leurs propriétés porteuses.

Un autre avantage est d'offrir à la structure une résistance accrue vis-à-vis des efforts supportés par ladite structure complexe, la résistance de la structure complexe étant supérieure à la somme des résistances des ensembles isolés de ladite structure, c'est-à-dire des différents modules.

Un autre avantage est de former des structures de grand volume tout en choisissant la répartition de ce volume dans l'espace.

### Éléments de liaison

Comme illustré en figure 3, chaque poutre Pₖ est maintenue en appui sur deux poutres adjacentes au niveau des premiers et deuxièmes points d'appui A_{x, y,} B_{x, y} entre les poutres Pₖ au moyen d'éléments de liaison L_{x, y}. Chaque poutre Pₖ est maintenue en appui sur une poutre adjacente au niveau d'un point de liaison par un élément de liaison L_{x, y}.

Selon un mode de réalisation, les éléments de liaison L_{x, y} visent simplement à maintenir le contact entre les poutres au niveau de leurs points d'appui respectifs. Selon un mode de réalisation, la présence des éléments de liaison n'est pas nécessaire pour maintenir l'équilibre des forces et pour procurer sa nature portante autoporteuse à la structure. Les éléments de liaison contribuent donc au maintien de la poutre au niveau de son point d'appui avec une autre poutre. En d'autres termes, les éléments de liaison servent d'une part à simplifier le montage de la structure Sₚ, et d'autre part, permettent d'éviter que la structure ne soit déstabilisée ou déformée, notamment par une rotation d'une poutre autour d'un axe orthogonal à son point d'appui haut A_{x, y} et traversant les deux poutres (voir par exemple l'axe Dr₃ pour les poutres P₁ et P₂ sur la figure 4). Ainsi, les éléments de liaison permettent d'éviter un pivotement d'une poutre par rapport à une autre au niveau de leur point d'appui, c'est-à-dire permettent d'éviter un « effet ciseau ».

Selon un mode de réalisation, les éléments de liaison L_{x, y} sont agencés et dimensionnés pour éviter un effet ciseau, c'est-à-dire un glissement d'une poutre vis-à-vis d'une poutre adjacente au niveau du point de contact ou de la zone de contact ou d'une rotation d'une poutre vis-à-vis d'une poutre adjacente au niveau du point de contact ou de la zone de contact.

Optionnellement, dans la configuration montée, au moins un élément de liaison L_{x, y} est positionné de sorte qu'il soutient l'une des poutres Pₖ.

Un avantage est de contribuer au maintien de la poutre au niveau de son point d'appui.

Optionnellement, chaque élément de liaison relie uniquement deux poutres Pₖ entre elles.

Dans la configuration montée, la structure S_{P} est stable par elle-même du fait de la géométrie des entrecroisements entre les poutres P_{K} et de la compensation réciproque des déports inclinés. Un objectif des éléments de liaison L_{x, y} est donc de maintenir la géométrie des entrecroisements. Les éléments de liaison L_{x, y} assurent essentiellement une fonction de résistance à la traction et au cisaillement, au niveau des premiers points d'appui hauts A_{x, y} et au niveau des deuxièmes points d'appui bas B_{x, y} entre deux poutres Pₖ qui se croisent.

Un avantage est que les poutres Pₖ ne se dissocient pas et la structure Sₚ ne se déforme pas.

Un autre avantage est de maintenir l'altitude des premiers points d'appui hauts A_{x, y} et des deuxièmes points d'appui bas B_{x, y} sensiblement constante

Selon divers exemples, les éléments de liaison L_{x, y} comprennent un cordage, un collier métallique, un collage ou encore un boulonnage, un clouage ou une vis.

Les exemples précités ne sont nullement limitatifs, et tout type de liaison adaptée à maintenir deux poutres Pₖ en appui l'une contre l'autre à une altitude constante est susceptible d'être mis en œuvre dans le cadre de l'invention. Le type de liaison mise en œuvre dans le cadre de l'invention est sensiblement corrélé aux dimensions des poutres Pₖ, ainsi qu'au type de matériau constituant ces dernières.

Selon un exemple de réalisation, au moins un élément de liaison L_{x, y} comprend une corde dont la longueur est comprise entre 1,5 fois et 2 fois la longueur d'une poutre P_{K}. La mise en œuvre d'une corde d'une telle dimension est particulièrement avantageuse pour assurer le maintien en appui des deux poutres P_{K}.

Dans un mode de réalisation, au moins un élément de liaison L_{x, y} est détachable. On entend par « détachable » qu'il est possible de désolidariser deux poutres P_{K} liées entre elles au moyen d'un élément de liaison L_{x, y.} Un avantage est de mettre en œuvre une configuration dans laquelle la structure est démontable partiellement ou totalement. Un autre avantage est de permettre le remplacement des éléments composant la structure lorsqu'ils sont endommagés. Un autre avantage est de favoriser la durabilité de la structure et des éléments qu'elle supporte.

Dans un mode de réalisation, la structure Sₚ comprend au moins un élément de solivage. Un tel élément de solivage est par exemple mis en œuvre pour joindre deux premières extrémités basses E₁ ou joindre deux deuxièmes extrémités hautes E₂ de deux poutres Pₖ qui se croisent.

Un avantage est de mettre en œuvre une pièce qui sert de tirant entre deux extrémités de deux poutres adjacentes pour renforcer la stabilité de la structure Sₚ.

Un avantage de joindre les premières extrémités entre elles est de fixer d'avantage la forme de la structure autoportante. On note que cette option est subsidiaire puisque la forme de la structure est maintenue par les liaisons entre les poutres Pₖ.

Un autre avantage est de pouvoir apposer un toit ou un toit-terrasse sur la structure dans le cas de la réalisation d'une structure habitable.

Dans un mode de réalisation, une pluralité d'éléments de solivage sont apposés entre les deuxièmes points d'appui bas B_{x, y}.

Un avantage est de pouvoir apposer un plancher dans la structure dans le cas de la réalisation d'une structure habitable.

### Degrés de liberté entre les poutres

Dans un exemple de réalisation illustré en figure 4, au moins un des éléments de liaison L_{x, y} autorise un ou plusieurs degrés de liberté en rotation et/ou en translation entre une poutre Pₖ et la première poutre adjacente Pk₁ ou la deuxième poutre adjacente Pk_{2.}

Cela permet de modifier la géométrie de la structure pour passer d'une configuration instable à la configuration montée dans laquelle la structure est autoportante. Cela permet également d'obtenir des configurations montées autoportantes adaptées au cas d'usage ou à la géométrie du terrain.

Par exemple, un degré de liberté en translation d'une poutre Pₖ le long de l'axe longitudinal d'une poutre adjacente à laquelle ladite poutre Pₖ est reliée par l'élément de liaison L_{x, y} permet avantageusement de modifier la position du point de croisement (c'est-à-dire du point d'appui) entre deux poutres P_{K}.

Selon un mode de réalisation, au moins un élément de liaison L_{x, y} autorise au moins un degré de liberté en rotation d'une poutre Pₖ par rapport à une poutre adjacente à laquelle l'élément de liaison L_{x, y} relie la poutre Pₖ.

Un avantage est de permettre de modifier l'angle selon lequel deux poutres adjacentes P_{K} se croisent. Un avantage de permettre de faire varier les angles de croisement entre les poutres Pₖ est de faire varier le volume intérieur de la structure S_{P} pour l'adapter aux cas d'usage. Dans l'exemple de la figure 4, chaque élément de liaison L_{x, y} autorise trois degrés de liberté en rotation Dᵣ₁, Dᵣ₂, Dᵣ₃ entre les deux poutres Pₖ qu'il relie.

Selon un mode de réalisation, au moins un élément de liaison L_{x, y} autorise au moins un degré de liberté en translation d'une poutre Pₖ par rapport à une poutre adjacente à laquelle l'élément de liaison L_{x, y} relie la poutre Pₖ.

Par exemple, l'élément de liaison L_{x, y} autorise un degré de liberté en translation de la poutre Pₖ par rapport à la poutre adjacente Pₖ₁ (ou Pₖ₂) selon l'axe longitudinal de la poutre adjacente Pₖ₁ (ou Pₖ₂) et / ou un degré de liberté en translation de la poutre Pₖ par rapport à la poutre adjacente Pₖ₁ (ou Pₖ₂) selon l'axe longitudinal de la poutre Pₖ.

Dans l'exemple de la figure 4, chaque élément de liaison L_{x, y} autorise deux degrés de liberté en translation Dₜ₁, Dₜ₂ entre les deux poutres Pₖ qu'il relie.

Un autre avantage est de pouvoir définir un grand nombre de configurations montées de la structure S_{P} pour un même ensemble de poutres P_{K}.

Selon un mode de réalisation, dans la configuration montée, au moins une poutre P_{K} croise la première poutre adjacente Pₖ₁ et la deuxième poutre adjacente Pk₂ en formant respectivement un premier angle inférieur à 90° avec la première poutre adjacente Pₖ₁ et un deuxième angle inférieur à 90° avec la deuxième poutre adjacente Pₖ₂.

Selon un autre mode de réalisation, dans la configuration montée, au moins une poutre Pₖ croise la première poutre adjacente Pₖ₁ et la deuxième poutre adjacente Pₖ₂ en formant un premier angle supérieur à 90° avec la première poutre adjacente Pₖ₁ et un deuxième angle supérieur à 90° avec la deuxième poutre adjacente Pₖ₂.

Selon un mode de réalisation, dans la configuration montée, au moins une poutre Pₖ croise la première poutre adjacente Pₖ₁ en formant avec celle-ci un premier angle supérieur à 90° et croise la deuxième poutre adjacente Pₖ₂ en formant avec celle-ci un deuxième angle inférieur à 90°.

Selon un mode de réalisation, dans la configuration montée, au moins une poutre P_{K} croise la première poutre adjacente Pₖ₁ en formant avec celle-ci un premier angle inférieur à 90° et croise la deuxième poutre adjacente Pk₂ en formant avec celle-ci un deuxième angle supérieur à 90°.

Dans un autre mode de réalisation, au moins un des éléments de liaison L_{x, y} est apte à être dans une première configuration dans laquelle il autorise un ou plusieurs degrés de liberté en rotation et/ou en translation, et apte à être dans une deuxième configuration dans laquelle il n'autorise aucun degré de liberté.

Un avantage est de permettre de régler les angles de croisement des poutres et/ou les positions des points d'appui pour amener la structure dans la position montée par exemple en tenant compte des irrégularités du support, puis de maintenir la structure dans la position montée.

En variante, les éléments de liaison L_{x, y} n'autorisent pas de degré(s) de liberté entre les poutres Pₖ. Autrement dit, les poutres Pₖ sont fixes les unes par rapport aux autres. Dans ce cas, la structure est apte à être dans une unique configuration montée.

### Haubanage

Dans un mode de réalisation, la structure portante S_{P} comprend un ou plusieurs haubans Hₓ. On précise que les haubans Hₓ sont subsidiaires quant aux fonctions d'autoportance.

Un avantage des haubans Hₓ est de contribuer à la prise en charge des efforts extérieurs appliqués sur la structure S_{P}.

Un autre avantage des haubans Hₓ est de faciliter la mise en place d'un habillage autour de la structure S_{P}, tel que par exemple une toile de chapiteau. Cet habillage peut par exemple recouvrir totalement la structure S_{P}. Selon un autre exemple, l'habillage ne recouvre que partiellement la structure S_{P}.

L'utilisation de haubans Hₓ trouve un intérêt particulier pour la réalisation de structures de chapiteaux. Un avantage des haubans Hₓ est de faciliter le montage/démontage de la structure Sₚ tout en s'affranchissant des contraintes liées au poids que représente la mise en œuvre d'une poutre subsidiaire (ou arbalétrier).

Un autre avantage des haubans Hₓ est de faciliter le réglage de la symétrie lors du montage de la structure Sₚ, par exemple au moyen de tire-forts.

Chaque hauban Hₓ comprend par exemple un câble fixé à la structure en un point de fixation et des moyens de fixation destinés à fixer le hauban Hₓ au support dans la configuration montée.

Le point de fixation d'un hauban Hₓ sur la structure S_{P} est par exemple situé au niveau d'un des premiers points d'appui hauts A_{x,y} ou au niveau d'un des deuxièmes points d'appui bas B_{x,y}.

Dans un mode de réalisation, au moins un hauban Hₓ s'étend dans une direction perpendiculaire au premier plan PL₁.

Selon un mode de réalisation, au moins un hauban Hₓ s'étend dans un sens orienté vers l'extérieur de la structure S_{P}. Au moins un hauban Hₓ s'étend par exemple suivant le sens d'inclinaison d'un portique de la structure S_{P}.

Dans un mode de réalisation, dans la configuration montée, la structure S_{P} comprend une pluralité de haubans Hₓ reliés à la structure et s'étendant depuis le support vers chaque deuxième point d'appui bas B_{x, y.}

Dans un mode de réalisation, dans la configuration montée, la structure Sₚ comprend une pluralité de haubans Hₓ reliés à la structure et s'étendant depuis le support vers chaque premier point d'appui haut A_{x, y}.

Dans un mode de réalisation, dans la configuration montée, chaque hauban Hₓ est fixé au niveau d'une deuxième extrémité haute E₂ d'une poutre Pₖ de la structure Sₚ.

Un avantage est d'augmenter le volume supérieur de la structure S_{P}. Cette configuration est particulièrement avantageuse dans le cas de la réalisation d'une structure de spectacle. En effet, l'augmentation du volume supérieur de la structure permet d'augmenter l'espace disponible pour la réalisation d'acrobaties en hauteur. Un autre avantage est de disposer de davantage d'espace disponible pour l'installation de matériel de régie, tels que des équipements de régie lumière positionnés en hauteur.

Selon un mode de réalisation, au moins un hauban Hₓ forme un angle de sensiblement 90° avec le support en son point de fixation ou avec au moins une poutre P_{K} en un point d'appui.

Le hauban Hₓ est par exemple fixé en un point d'appui entre deux poutres Pₖ se croisant selon un angle de sensiblement 90°.

Un avantage est de former un angle sensiblement régulier en trois dimensions avec les poutres Pₖ qui se croisent.

Dans un mode de réalisation, au moins 3 haubans Hₓ sont de longueur sensiblement égale. Il s'agit par exemple d'au moins trois haubans Hₓ reliés à la structure au niveau des premiers points d'appui hauts A_{x, y} ou d'au moins trois haubans Hₓ reliés à la structure au niveau des deuxièmes points d'appui bas B_{x, y}.

Dans un mode de réalisation, les distances entre deux points d'attache au sol de deux haubans Hₓ consécutifs sont sensiblement égales. On entend par deux haubans « consécutifs » des haubans reliés à des points d'appui hauts ou des points d'appui bas consécutifs de la structure S_{P}.

Dans un mode de réalisation, les projections des points d'attache au sol et des points d'attache à la structure S_{P} de deux haubans consécutifs forment les sommets d'un trapèze.

Dans un mode de réalisation, les haubans Hₓ reliés à la structure au niveau des premiers points d'appui hauts A_{x, y} sont de longueurs sensiblement égales.

Dans un mode de réalisation, les haubans Hₓ reliés à la structure au niveau des deuxièmes points d'appui bas B_{x, y} sont de longueurs sensiblement égales.

Dans un mode de réalisation, au moins un hauban relié à la structure S_{P} au niveau d'un premier point d'appui est d'une longueur sensiblement égale à la longueur d'une poutre P_{K}.

Optionnellement, au moins un tirant est relié par une extrémité à un portique. L'extrémité du tirant est par exemple reliée au portique au niveau du premier point d'appui haut A_{x, y}. L'autre extrémité du tirant sert par exemple avantageusement de support à un solivage. Les tirants comprennent par exemple des câbles rigides métalliques.

Un avantage est de pouvoir agrandir le solivage au-delà d'une ligne reliant deux deuxièmes points d'appui bas B_{x, y}, dans un cas où la configuration rend difficile l'utilisation d'arbalétriers.

### Meubles

L'invention se rapporte également à un meuble comprenant une structure portante Sₚ selon l'invention.

La figure 6 illustre un mode de réalisation dans lequel la structure S_{P} de la figure 1 est mise en œuvre pour la réalisation d'un tabouret.

La structure de l'invention est déclinable à d'autres types de meubles tels que par exemple des tables, des fauteuils, des portes- manteaux, des chaises, ou des bureaux.

Ces exemples sont cités à titre non limitatif. La structure S_{P} de l'invention est déclinable à tout type de meuble.

Le nombre de poutres P_{K} utilisées, leurs dimensions, les angles de croisement entre les poutres Pₖ ainsi que le matériau choisi dépendent uniquement des cas d'usages ainsi que du volume recherché pour le meuble.

Dans un mode de réalisation, les poutres Pₖ sont configurées et les éléments de liaison L_{x, y} sont agencés de sorte que, dans la configuration montée, les angles formés par le croisement des poutres Pₖ au niveau des premiers points d'appui hauts A_{x, y} sont inférieurs aux angles formés par le croisement des poutres Pₖ au niveau des deuxièmes points d'appui bas B_{x, y}.

Cette configuration est avantageuse pour la réalisation de meubles particuliers. Par exemple, dans le cas de la réalisation d'une table, cela permet avantageusement que le périmètre d'un plateau apposé sur les deuxièmes extrémités hautes E₂ excède le périmètre formé par les premières extrémités basses E₁.

Un autre avantage est de ménager suffisamment d'espace pour les jambes d'un usager assis à la table formée par la structure Sₚ.

### Arts du spectacle

L'invention se rapporte également à un chapiteau, par exemple de cirque, comprenant une structure portante selon l'invention.

Un intérêt particulier de cette mise en œuvre provient de la facilité de montage et de démontage de la structure. En effet, les chapiteaux de cirque sont bien souvent des structures éphémères. Ainsi, il est particulièrement avantageux de monter une structure autoporteuse stable, nécessitant peu de matériaux pour l'assemblage et pouvant être facilement démontée.

Selon un autre aspect, l'invention se rapporte également à une structure de support d'acrobaties comprenant une structure Sₚ selon l'invention.

Dans un mode de réalisation, les poutres Pₖ composant la structure Sₚ sont de longueurs différentes. Dans ce cas, les deuxièmes extrémités hautes E₂ des poutres Pₖ sont par exemple positionnées à des altitudes différentes par rapport au support S_{P}. Cette configuration est particulièrement avantageuse pour le cas des structures de spectacle. En effet, lorsque la structure est recouverte par un habillage, tel qu'une toile de chapiteau, cela permet avantageusement de placer le sommet du chapiteau selon une pente.

Dans un mode de réalisation, les poutres Pₖ de la structure Sₚ sont agencées les unes par rapport aux autres de sorte que, dans la configuration montée, les deuxièmes extrémités hautes E₂ de chaque poutre Pₖ sont placées à des altitudes différentes.

Les poutres Pₖ sont par exemple disposées les unes par rapport aux autres de sorte que, dans la configuration montée, quand la structure Sₚ est recouverte d'un habillage, la pente du sommet de la structure est supérieure ou égale à 5%.

Un avantage est de permettre l'écoulement des eaux et le glissement de la neige en cas d'intempéries.

### Structure pour l'habitat

Selon un autre aspect, l'invention se rapporte à un habitat comprenant une structure portante selon l'invention.

La structure S_{P} de l'invention permet de réaliser des structures pour l'habitat réalisables uniquement en charpente. Les avantages sont nombreux.

Un avantage est que la structure S_{P} de l'invention est respectueuse de l'environnement. En effet, la structure S_{P} de l'invention permet la réalisation d'un habitat stable et autoportant en s'affranchissant de l'utilisation de béton.

Un deuxième avantage est que la structure S_{P} de l'invention permet de réaliser une structure pour l'habitat particulièrement stable et résistante pour un coût avantageux.

La figure 5 illustre un exemple de réalisation d'un habitat dont la charpente est une structure portante selon l'invention. La structure comprend un ensemble ENS₁ de douze poutres P_{K}. La structure S_{P} de cet exemple comprend donc six poutres Pₖ supplémentaires par rapport à la configuration minimale de six poutres Pₖ. Cette configuration permet de définir un volume intérieur important. La structure S_{P} est montée sur un sol horizontal et les premiers points d'appui hauts A_{x, y} entre chaque poutre Pₖ et une poutre adjacente sont disposés dans un même premier plan (non représenté). Les portiques et sous-portiques de la structure sont couverts par des pans inclinés.

La structure Sₚ comprend par exemple une charpente de toiture comprenant une ferme composée d'arbalétriers servant d'appui à des pannes pour supporter les pans inclinés. Les pannes comprennent par exemple des pannes faîtières (ou faîtage), des pannes sablières et des pannes intermédiaires dites pannes ventrières. La structure Sₚ comprend par exemple des chevrons pour répartir le poids de la toiture sur les pannes.

Les arbalétriers sont par exemple mis en œuvre selon un angle particulier de sorte qu'ils s'alignent sur un même plan que les portiques et les sous-portiques. Cela permet de ménager un maximum de positions d'appui aux pannes sur les sous-portiques, en plus des points d'appui déjà disponibles sur les arbalétriers. Un avantage est de réduire la section des pannes et donc de réduire la quantité de matière nécessaire à la réalisation de la structure.

Les pans inclinés sont par exemple des panneaux en polycarbonate. Le polycarbonate constituant les panneaux est par exemple préalablement traité pour augmenter sa longévité sans diminuer sa robustesse. Un tel traitement consiste par exemple en un traitement anti-UV.

Un avantage des panneaux en polycarbonate est de laisser passer la lumière ainsi que la chaleur, tout en étant un bon isolant acoustique.

Selon un mode de réalisation, les poutres P_{K} sont recouvertes d'un revêtement étanche. Un avantage est d'éviter le pourrissement du bois sous l'effet de l'humidité.

Selon un mode de réalisation, les premières extrémités basses E₁ des poutres Pₖ sont positionnées dans une cavité au sol. La cavité est par exemple remplie de pierres.

Un avantage est de permettre l'écoulement de l'eau dans la cavité en cas de pluie sans détériorer les portions inférieures des poutres P_{K}. Les portions inférieures des poutres insérées dans les cavités peuvent également être recouvertes d'un revêtement étanche.

Dans un mode de réalisation préféré, au moins un deuxième point d'appui bas B_{x, y} est situé à un minimum de 2 mètres d'altitude par rapport au support. Cette configuration est particulièrement avantageuse pour ménager une entrée à une personne adulte dans le cas de la réalisation d'une structure habitable.

Dans un mode de réalisation, tous les deuxièmes points d'appui bas B_{x, y} sont situés à au moins deux mètres d'altitude par rapport au support sur lequel est apposée chaque première extrémité basse E₁.

Dans cette configuration, cela permet avantageusement de positionner un plancher habitable ou premier étage à une hauteur minimale acceptable pour le passage d'un utilisateur adulte.

Dans un mode de réalisation, chaque premier point d'appui haut A_{x, y} est positionné à une altitude de deux mètres minimum par rapport aux deuxièmes points d'appui bas B_{x,y}.

Un avantage est de ménager un étage habitable et accessible pour une personne adulte dans la structure Sₚ.

Dans un mode de réalisation, les deuxièmes extrémités hautes E₂ sont situées à une altitude de deux mètres minimum par rapport aux premiers points d'appui hauts A_{x, y.} Cette configuration est particulièrement avantageuse lorsque les deuxièmes extrémités hautes E₂ de chaque poutre P_{K} se croisant sont liées entre elles par un élément de solivage. Dans cette configuration, il est possible d'apposer un toit sur la structure S_{P}. L'altitude minimale entre les premiers points d'appui hauts A_{x, y} et les deuxièmes extrémités hautes E₂ permet avantageusement de ménager un espace suffisant entre un étage de la structure Sₚ et un toit.

Selon un autre exemple de réalisation, la structure S_{P} constitue la structure d'une cabane. La structure Sₚ comprend par exemple l'ensemble ENS₁ de six poutres Pₖ. Les premières extrémités basses E₁ et deuxièmes extrémités hautes E₂ délimitent des plans horizontaux entre lesquels un ou plusieurs étages de la structure peuvent être compris. Le ou les étage(s) peu(ven)t être mis en œuvre par des plafonds ou des sols réalisés au moyen d'un ou plusieurs élément(s) de solivage.

Selon un mode de réalisation, un premier étage peut être défini dans un plan confondu au plan passant par les croisements des poutres Pₖ au niveau des premiers points d'appui hauts A_{x, y}. Dans ce cas, les points d'appui hauts servent de supports pour un solivage.

Selon un mode de réalisation, un autre étage peut être défini dans un plan confondu au plan passant par les croisements des poutres Pₖ au niveau des seconds points d'appui bas B_{x, y}. Dans ce cas, les points d'appui bas servent de supports pour un solivage également.

Selon un exemple, les deuxièmes extrémités hautes E₂ sont aptes à servir de support, par exemple pour la pose d'un toit-terrasse ou un toit de cabane.

Dans un mode de réalisation, les croisements des poutres Pₖ au niveau des premiers points d'appui hauts A_{x, y}, et au niveau des deuxièmes points d'appui bas B_{x, y} forment des surfaces de formes sensiblement triangulaires. Les surfaces entre deux premiers points d'appui hauts A_{x, y} consécutifs et un point d'appui bas B_{x, y} agencé latéralement entre lesdits deux premiers points d'appui hauts A_{x, y} forment par exemple une forme sensiblement triangulaire inverse. Les surfaces entre deux deuxièmes points d'appui bas B_{x, y} consécutifs et au moins un point d'appui haut A_{x, y} considéré(s) au niveau d'une poutre adjacente des poutres ayant des deuxièmes points d'appui bas considérés forment par exemple une forme sensiblement triangulaire. Les surfaces triangulaires sont par exemple inclinées vers l'extérieur en raison du déport incliné des portiques de la structure S_{P}. Ces surfaces triangulaires peuvent être comblées, par exemple pour former les murs de la cabane.

Selon un autre exemple, une cabane de plus grand volume est réalisée en ajoutant des paires de poutres Pₖ supplémentaires.

Un avantage est de constituer un habitacle clos situé à distance du sol. C'est notamment le cas lorsque l'entrée de la cabane est située au niveau des deuxièmes points d'appui bas B_{x, y.} Les portions de poutres P_{K} entre les premières extrémités basses E₁ et les deuxièmes points d'appui bas Bₓ,_{y} forment alors les « pilotis » permettant de former une cabane à une altitude prédéfinie du sol.

Les premiers points d'appui hauts A_{x, y} sont par exemple liés entre eux au moyen d'éléments de solivage. Un avantage est de permettre la pose d'un plafond.

Les deuxièmes points d'appui bas B_{x, y} sont par exemple liés entre eux au moyen d'éléments de solivage. Un avantage est de permettre la pose d'un plancher.

Un autre avantage est de pouvoir former une structure en alvéoles.

Un autre avantage est de former une cabane pouvant être facilement montée et démontée.

Selon un exemple, les portions des poutres Pₖ entre les premiers points d'appui hauts A_{x, y} et les deuxièmes extrémités hautes E₂ se trouvent en dehors du volume fermé habitable de la structure S_{P}.

Pour résumer, l'invention se rapporte à une structure, autoporteuse et portante, stable, particulièrement résistante, nécessitant peu de matière et offrant un large volume intérieur, respectueuse de l'environnement et utilisant des matériaux facilement disponibles, pouvant être montée sur des supports variés et déclinable dans une grande variété de domaines.

Des exemples sont notamment les habitats (par exemple maisons, cabane...), les habitacles (par exemple un garage ou une pergola), les agrès tels que les agrès de sport, les arbres à chats, les jouets (structures à monter), les jeux de grimpes, les meubles, les châssis, les plateformes (par exemple plateforme d'observation pour la chasse ou plateforme d'accrobranche), les chapiteaux, et dans tout autre domaine dans lequel un cas d'application comprend la mise en œuvre d'une structure autoporteuse et portante offrant un volume intérieur optimisé, respectueuse de l'environnement et nécessitant peu de matière pour être montée.

## Revendications

1. Structure portante autoporteuse (S_{P}) comportant un ensemble (ENS₁) de N poutres (Pₖ), N étant pair et supérieur ou égal à six, la structure portante autoporteuse (S_{P}) comprenant des éléments de liaison (L_{x, y}) reliant les poutres (Pₖ) entre elles et maintenant chaque poutre (Pₖ) en appui contre une première poutre adjacente (Pₖ₁) en un premier point d'appui haut (A_{x, y}) de la poutre (Pₖ), et maintenant chaque poutre (Pₖ) en appui contre une deuxième poutre adjacente (Pₖ₂) en un deuxième point d'appui bas (B_{x, y}) de la poutre (Pₖ), le premier point d'appui haut (A_{x, y}) et le deuxième point d'appui bas (B_{x, y}) étant distants d'une première extrémité basse (E₁) de la poutre (Pₖ) et d'une deuxième extrémité haute (E₂) de la poutre (Pₖ), lesdites poutres (Pₖ) étant configurées et les éléments de liaison (L_{x, y}) reliant les poutres (Pₖ) les unes aux autres de sorte que la structure portante autoporteuse (Sₚ) se trouve dans une configuration montée dans laquelle :
▪ La structure portante autoporteuse (Sₚ) est stable par elle-même et repose sur un support par les premières extrémités basses (E₁) desdites poutres (Pₖ) de l'ensemble (ENS₁) ;
▪ Chaque poutre (Pₖ) croise la première poutre adjacente (Pₖ₁) au niveau du premier point d'appui haut (A_{x, y}) et croise la deuxième poutre (Pₖ₂) adjacente au niveau du deuxième point d'appui bas (B_{x, y}) ;
▪ Des projections des premiers points d'appui hauts (A_{x, y}) et des deuxièmes points d'appui bas, (B_{x, y}) sur un premier plan (PL₁) forment des sommets d'un polygone convexe (PGN) dont chaque côté relie une projection (Y_{x, y}) d'un des premiers points d'appui hauts (A_{x, y}) sur le premier plan (PL₁) à une projection (Z_{x, y}) d'un des deuxièmes points d'appui bas (B_{x, y}) sur ledit premier plan (PL₁).
▪ Chaque poutre (Pₖ) est :
▪ Soit plus proche d'un axe vertical (O_{y}) passant par un centre du polygone convexe (PGN) que la première poutre adjacente (Pₖ₁), au niveau du premier point d'appui haut (A_{x, y}) et plus éloignée de l'axe vertical (O_{y}) que la deuxième poutre adjacente (Pₖ₂), au niveau du deuxième point d'appui bas (B_{x,y}) ;
▪ Soit plus éloignée de l'axe vertical (O_{y}) que la première poutre adjacente (Pₖ₁), au niveau du premier point d'appui haut (Aₓ, _{y}) et plus proche, de l'axe vertical (Oₓ) que la deuxième poutre adjacente (Pₖ₂) au niveau du deuxième point d'appui bas (B_{x,y}).

2. Structure portante autoporteuse selon la revendication 1, dans laquelle les projections (Y_{x, y}) du point d'appui haut (Aₓ, _{y}) et les projections (Z_{x, y}) du point d'appui bas (B_{x, y}) de chaque poutre (Pₖ) avec ses deux poutres adjacentes respectives sur le premier plan (PL₁) forment les extrémités d'un côté du polygone convexe (PGN).

3. Structure portante autoporteuse selon l'une quelconque des revendications 1 à 2, dans laquelle, pour chaque poutre (Pₖ) de la structure, les deuxièmes extrémités hautes (E₂) sont plus éloignées de l'axe vertical (O_{y}) que les premières extrémités basses (E₁).

4. Structure portante autoporteuse selon l'une quelconque des revendications 1 à 2, dans laquelle, pour chaque poutre (Pₖ) de la structure, les premières extrémités basses (E₁) sont plus éloignées de l'axe vertical (O_{y}) que les deuxièmes extrémités hautes (E₂).

5. Structure portante autoporteuse selon l'une quelconque des revendications précédentes, dans laquelle chaque poutre (Pₖ) forme un portique (POᵣₜ) avec la première poutre adjacente (Pₖ₁) à ladite poutre (Pₖ), et forme un sous-portique (SPOᵣₜ) avec la deuxième poutre adjacente (Pₖ₂) à ladite poutre (Pₖ), et dans laquelle la première poutre adjacente (Pₖ₁) appartient à un sous-portique (SPOᵣₜₖ₁, SPOᵣₜₖ₂) adjacent au portique (POᵣₜ) auquel appartient ladite poutre (Pₖ).

6. Structure portante autoporteuse (Sₚ) selon l'une quelconque des revendications précédentes, dans laquelle chaque poutre (Pₖ) forme un portique (POᵣₜ) avec la première poutre adjacente (Pₖ₁) à ladite poutre (Pₖ) et forme un sous-portique (SPOᵣₜ) avec la deuxième poutre adjacente (Pₖ₂) à ladite poutre (Pₖ), et dans laquelle :
▪ chaque sous-portique (SPOᵣₜ) présente un premier angle d'inclinaison (α₁) par rapport au sol et orienté vers un centre de la structure (Sₚ) inférieur à 90° ;
▪ chaque portique (POᵣₜ) présente un deuxième angle d'inclinaison (α₂) par rapport au sol et orienté vers l'extérieur de la structure (Sₚ) inférieur à 90°.

7. Structure portante autoporteuse selon l'une quelconque des revendications précédentes, dans laquelle des projections (W_{y}) de chacune des premières extrémités basses (E₁) et de chacune des deuxièmes extrémités hautes (E₂) de chaque poutre (Pk) sur le premier plan (PL₁) se trouvent à l'extérieur dudit polygone convexe (PGN).

8. Structure portante autoporteuse (S_{P}) selon l'une quelconque des revendications précédentes, dans laquelle chaque poutre (Pₖ) présente au maximum deux points d'appui avec d'autres poutres de la structure.

9. Structure portante autoporteuse (S_{P}) selon l'une quelconque des revendications précédentes, **caractérisée en ce que** les éléments de liaison (L_{x, y}) relient les poutres (Pₖ) entre elles de sorte que chaque poutre (Pₖ) de l'ensemble (ENS₁) exerce :
▪ Soit une première force de réaction (Fᵣ₁) ayant une composante radiale par rapport à un axe parallèle à la force de gravitation et passant par un centre du polygone (PGN) sur la première poutre (Pₖ₁) au niveau du premier point d'appui haut (Aₓ, _{y}) et selon un premier sens, et une deuxième force de réaction (Fᵣ₂) ayant une composante radiale selon un deuxième sens inverse au premier sens sur la deuxième poutre (Pₖ₂) immédiatement adjacente à ladite poutre (Pₖ) et au niveau du deuxième point d'appui bas (B_{x, y}) ;
▪ Soit une troisième force de réaction (Fᵣ₃) ayant une composante radiale par rapport à un axe parallèle à la force de gravitation et passant par un centre du polygone sur la deuxième poutre (Pₖ₂) immédiatement adjacente à ladite poutre (Pₖ) au niveau du deuxième point d'appui bas (B_{x, y}) et selon le premier sens, et une quatrième force de réaction (Fᵣ₄) ayant une composante radiale selon le deuxième sens inverse au premier sens sur la première poutre (Pₖ₁) au niveau du premier point d'appui haut (A_{x, y}).

10. Structure portante autoporteuse (S_{P}) selon l'une quelconque des revendications précédentes, dans laquelle les poutres (Pₖ) sont configurées et les éléments de liaison (L_{x, y}) relient les poutres (Pₖ) les unes aux autres de sorte que la structure se trouve dans une configuration montée dans laquelle :
▪ le polygone convexe (PGN) est régulier,
▪ des projections des premières extrémités basses (E₁) des poutres (Pₖ) sur le premier plan (PL₁) sont situées sur un même cercle de centre situé au centre du polygone (PGN).

11. Structure portante autoporteuse (S_{P}) selon l'une quelconque des revendications précédentes, dans laquelle les poutres (Pₖ) présentent sensiblement une même longueur, ladite structure portante autoporteuse étant **caractérisée en ce qu'**une première distance séparant le premier point d'appui haut (Aₓ, _{y}) de la première extrémité basse (E₁) de la poutre (Pₖ) est sensiblement égale à une deuxième distance séparant le deuxième point d'appui bas (B_{x, y}) de la deuxième extrémité haute (E₂) de la poutre (Pₖ) et est sensiblement égale au tiers de la longueur de la poutre (Pₖ).

12. Structure portante autoporteuse (S_{P}) selon l'une quelconque des revendications précédentes, dans laquelle les deuxièmes points d'appui bas (B_{x, y}) comprennent des points appartenant à un même deuxième plan (PL₂) sensiblement parallèle au premier plan (PL₁), et dans laquelle le premier plan (PL₁) est sensiblement perpendiculaire à la force de gravitation.

13. Structure portante autoporteuse (S_{P}) selon l'une quelconque des revendications précédentes, dans laquelle au moins un des éléments de liaison (L_{x, y}) se trouve dans une première configuration dans laquelle il autorise trois degrés de liberté en rotation (Dr₁, Dr₂, Dᵣ₃) entre une poutre (Pₖ) de l'ensemble (ENS₁) et soit :
▪ la première poutre adjacente (Pₖ₁) à ladite poutre (Pₖ) soit,
▪ la deuxième poutre adjacente (Pₖ₂) à ladite poutre (Pₖ).

14. Kit de montage d'une structure portante autoporteuse (Sₚ) selon l'une quelconque des revendications précédentes, comprenant :
▪ l'ensemble (ENS₁) d'au moins six poutres (P_{K}), les longueurs des poutres (Pₖ) étant comprises entre 0,5 mètres et 6 mètres, les premières extrémités basses (E₁) des poutres (Pₖ) étant usinées de sorte que, dans la configuration montée, les poutres (Pₖ) présentent un unique point d'appui sur le support en leurs premières extrémités basses (E₁) ;
▪ les éléments de liaison (L_{x, y}), lesdits éléments de liaison (L_{x, y}) étant aptes à relier les poutres (Pₖ) entre elles de sorte que la structure portante autoporteuse (Sₚ) soit apte à être dans la configuration montée,
▪ des embouts, chacun desdits embouts étant aptes à recouvrir une portion d'une poutre (Pₖ) à partir d'une première extrémité (E₁) de la poutre (Pₖ).

15. Habitat, Habitacle, jouet, agrès, meuble, châssis, plateforme, structure de jeux, ou chapiteau comprenant une structure portante autoporteuse (S_{P}) selon l'une quelconque des revendications 1 à 14.

## Patentansprüche

1. Selbsttragendes Tragwerk (Sₚ) umfassend eine Baugruppe (ENS₁) von N Trägern (Pₖ), wobei N gerade und größer oder gleich sechs ist, wobei das selbsttragende Tragwerk (S_{P}) Verbindungselemente (L_{x, y}) umfasst, die die Träger (Pₖ) miteinander verbinden und jeden Träger (Pₖ) gegen einen ersten benachbarten Träger (Pₖ₁) an einem ersten oberen Auflagepunkt (Aₓ, _{y}) des Trägers (Pₖ) halten, und jeden Träger (Pₖ) gegen einen zweiten benachbarten Träger (Pₖ₂) an einem zweiten unteren Auflagepunkt (B_{x, y}) des Trägers (Pₖ) halten, wobei der erste obere Auflagepunkt (A_{x, y}) und der zweite untere Auflagepunkt (B_{x, y}) von einem ersten unteren Ende (E₁) des Trägers (Pₖ) und von einem zweiten oberen Ende (E₂) des Trägers (Pₖ) entfernt sind, wobei die Träger (Pₖ) so konfiguriert sind und die Verbindungselemente (L_{x, y}) die Träger (Pₖ) so miteinander verbinden, dass sich das selbsttragende Tragwerk (Sₚ) in einer montierten Konfiguration befindet, in der:
▪ Das selbsttragende Tragwerk (Sₚ) eigenstabil ist und auf einer Stütze an den ersten unteren Enden (E₁) der Träger (Pₖ) der Baugruppe (ENS₁) ruht;
▪ Jeder Träger (Pₖ) den ersten benachbarten Träger (Pₖ₁) am ersten oberen Auflagepunkt (Aₓ, _{y}) und den zweiten benachbarten Träger (Pₖ₂) am zweiten unteren Auflagepunkt (B_{x, y}) kreuzt;
▪ Projektionen der ersten oberen Auflagepunkte (Aₓ, _{y}) und der zweiten unteren Auflagepunkte (B_{x, y}) auf eine erste Ebene (PL₁) bilden die Scheitelpunkte eines konvexen Polygons (PGN), dessen jede Seite eine Projektion (Y_{x, y}) von einem der ersten oberen Auflagepunkte (A_{x, y}) auf der ersten Ebene (PL₁) mit einer Projektion (Z_{x, y}) eines der zweiten unteren Auflagepunkte (B_{x, y}) auf der ersten Ebene (PL₁) verbindet.
▪ Jeder Träger (Pₖ) ist:
▪ Entweder am ersten oberen Auflagepunkt (A_{x, y}) näher an einer durch ein Zentrum des konvexen Polygons (PGN) verlaufenden vertikalen Achse (O_{y}) als der erste benachbarte Träger (Pₖ₁) und am zweiten unteren Auflagepunkt (B_{x,y}) weiter von der vertikalen Achse (O_{y}) entfernt als der zweite benachbarte Träger (Pₖ₂);
▪ Oder am ersten oberen Auflagepunkt (A_{x, y}) weiter von der vertikalen Achse (O_{y}) entfernt als der erste benachbarte Träger (Pₖ₁) und am zweiten unteren Auflagepunkt (B_{x,y}) näher an der vertikalen Achse (Oₓ) als der zweite benachbarte Träger (Pₖ₂).

2. Selbsttragendes Tragwerk nach Anspruch 1, wobei die Projektionen (Y_{x, y}) des oberen Auflagepunkts (Aₓ, _{y}) und die Projektionen (Z_{x, y}) des unteren Auflagepunkts (B_{x, y}) jedes Trägers (Pₖ) mit seinen beiden jeweils benachbarten Trägern auf der ersten Ebene (PL₁) die Enden einer Seite des konvexen Polygons (PGN) bilden.

3. Selbsttragendes Tragwerk nach einem der Ansprüche 1 bis 2, wobei für jeden Träger (Pₖ) des Tragwerks die zweiten oberen Enden (E₂) weiter von der vertikalen Achse (O_{y}) entfernt sind als die ersten unteren Enden (E₁).

4. Selbsttragendes Tragwerk nach einem der Ansprüche 1 bis 2, wobei für jeden Träger (Pₖ) des Tragwerks die ersten unteren Enden (E₁) weiter von der vertikalen Achse (O_{y}) entfernt sind als die zweiten oberen Enden (E₂).

5. Selbsttragendes Tragwerk nach einem der vorhergehenden Ansprüche, wobei jeder Träger (Pₖ) ein Portal (POᵣₜ) mit dem ersten benachbarten Träger (Pₖ₁) zu dem Träger (Pₖ) bildet und ein Unterportal (SPOᵣₜ) mit dem zweiten benachbarten Träger (Pₖ₂) zu dem Träger (Pₖ) bildet, und wobei der erste benachbarte Träger (Pₖ₁) zu einem Unterportal (SPOᵣₜₖ₁, SPOᵣₜₖ₂) gehört, das benachbart ist mit dem Portal (POᵣₜ), zu dem der Träger (Pₖ) gehört.

6. Selbsttragendes Tragwerk (Sₚ) nach einem der vorhergehenden Ansprüche, wobei jeder Träger (Pₖ) ein Portal (POᵣₜ) mit dem ersten mit dem Träger (Pₖ₁) benachbarten Träger (Pₖ) bildet und ein Unterportal (SPOᵣₜ) mit dem zweiten mit dem Träger (Pₖ₂) benachbarten Träger (Pₖ) bildet, und wobei:
▪ jedes Unterportal (SPOᵣₜ) einen ersten Neigungswinkel (α₁) zum Boden und zu einem Mittelpunkt des Tragwerks (Sₚ) ausgerichtet von weniger als 90° aufweist;
▪ jedes Portal (POᵣₜ) einen zweiten Neigungswinkel (α₂) zum Boden und zur Außenseite des Tragwerks (Sₚ) ausgerichtet von weniger als 90° aufweist.

7. Selbsttragendes Tragwerk nach einem der vorhergehenden Ansprüche, wobei sich Projektionen (W_{y}) jedes der ersten unteren Enden (E₁) und jedes der zweiten oberen Enden (E₂) jedes Trägers (Pk) auf der ersten Ebene (PL₁) außerhalb des konvexen Polygons (PGN) befinden.

8. Selbsttragendes Tragwerk (S_{P}) nach einem der vorhergehenden Ansprüche, wobei jeder Träger (Pₖ) höchstens zwei Auflagepunkte mit anderen Trägern des Tragwerks aufweist.

9. Selbsttragendes Tragwerk (S_{P}) nach einem der vorhergehenden Ansprüche, **dadurch gekennzeichnet, dass** die Verbindungselemente (L_{x, y}) die Träger (Pₖ) so miteinander verbinden, dass jeder Träger (Pₖ) der Baugruppe (ENS₁) folgendes ausübt:
▪ Entweder eine erste Reaktionskraft (Fᵣ₁) mit einer radialen Komponente in Bezug auf eine Achse, die parallel zur Gravitationskraft verläuft und durch einen Mittelpunkt des Polygons (PGN) auf dem ersten Träger (Pₖ₁) am ersten oberen Auflagepunkt (Aₓ, _{y}) und in einer ersten Richtung verläuft, und eine zweite Reaktionskraft (Fᵣ₂) mit einer radialen Komponente in einer zweiten Richtung entgegengesetzt zur ersten Richtung auf dem zweiten Träger (Pₖ₂) unmittelbar neben dem Träger (Pₖ) und am zweiten unteren Auflagepunkt (B_{x, y})
▪ Oder eine dritte Reaktionskraft (Fᵣ₃) mit einer radialen Komponente in Bezug auf eine Achse, die parallel zur Gravitationskraft verläuft und durch einen Mittelpunkt des Polygons auf dem zweiten Träger (Pₖ₂) verläuft, der unmittelbar neben dem Träger (Pₖ) am zweiten unteren Auflagepunkt (B_{x, y}) und in der ersten Richtung liegt, und eine vierte Reaktionskraft (Fᵣ₄) mit einer radialen Komponente in der zweiten Richtung entgegengesetzt zur ersten Richtung auf dem ersten Träger (Pₖ₁)) am ersten oberen Auflagepunkt (Aₓ, _{y}).

10. Selbsttragendes Tragwerk (S_{P}) nach einem der vorhergehenden Ansprüche, wobei die Träger (Pₖ) so konfiguriert sind und die Verbindungselemente (L_{x, y}) die Träger (Pₖ) so miteinander verbinden, dass sich das Tragwerk in einer montierten Konfiguration befindet, in der:
▪ das konvexe Polygon (PGN) regelmäßig ist,
▪ sich Projektionen der ersten unteren Enden (E₁) der Träger (Pₖ) auf die erste Ebene (PL₁) auf demselben Mittelkreis im Zentrum des Polygons (PGN) befinden.

11. Selbsttragendes Tragwerk (S_{P}) nach einem der vorhergehenden Ansprüche, wobei die Träger (Pₖ) im Wesentlichen dieselbe Länge aufweisen, wobei das selbsttragende Tragwerk **dadurch gekennzeichnet ist, dass** ein erster Abstand zwischen dem ersten oberen Auflagepunkt (Aₓ, _{y}) und dem ersten unteren Ende (E₁) des Trägers (Pₖ) im Wesentlichen gleich einem zweiten Abstand zwischen dem zweiten unteren Auflagepunkt (B_{x, y}) des zweiten oberen Endes (E₂) des Trägers (Pₖ) ist und im Wesentlichen einem Drittel der Trägerlänge (Pₖ) entspricht.

12. Selbsttragendes Tragwerk (S_{P}) nach einem der vorhergehenden Ansprüche, wobei die zweiten unteren Auflagepunkte (B_{x, y}) Punkte umfassen, die zu derselben zweiten Ebene (PL₂) im Wesentlichen parallel zur ersten Ebene (PL₁) gehören, und wobei die erste Ebene (PL₁) im Wesentlichen senkrecht zur Gravitationskraft ist.

13. Selbsttragendes Tragwerk (S_{P}) nach einem der vorhergehenden Ansprüche, wobei sich mindestens eines der Verbindungselemente (L_{x, y}) in einer ersten Konfiguration befindet, in der es drei Grad Drehfreiheit (Dr₁, Dr₂, Dᵣ₃) zulässt zwischen einem Träger (Pₖ) der Baugruppe (ENS₁) und entweder:
▪ dem ersten Träger (Pₖ₁), der dem Träger (Pₖ) benachbart ist, oder
▪ dem zweiten Träger (Pₖ₂), der dem Träger (Pₖ) benachbart ist.

14. Montagesatz für ein selbsttragendes Tragwerk (Sₚ) nach einem der vorhergehenden Ansprüche, umfassend:
▪ die Baugruppe (ENS₁) aus mindestens sechs Trägern (Pₖ), wobei die Längen der Träger (Pₖ) zwischen 0,5 Metern und 6 Metern liegen, wobei die ersten unteren Enden (E₁) der Träger (Pₖ) so bearbeitet sind, dass in der montierten Konfiguration die Träger (Pₖ) an ihren ersten unteren Enden einen einzigen Auflagepunkt auf dem Träger aufweisen (E₁);
▪ die Verbindungselemente (L_{x, y}), wobei die Verbindungselemente (L_{x, y}) dazu geeignet sind, die Träger (Pₖ) so miteinander zu verbinden, dass das selbsttragende Tragwerk (Sₚ) dazu geeignet ist, sich in der montierten Konfiguration zu befinden,
▪ Endkappen, wobei jede der Endkappen dazu geeignet ist, einen Teil eines Trägers (Pₖ) über ein erstes Ende (E₁) des Trägers (Pₖ) abzudecken.

15. Wohnraum, Innenraum, Spielzeug, Ausrüstung, Möbel, Gestell, Plattform, Spielanlage oder Zelt, umfassend ein selbsttragendes Tragwerk (S_{P}) nach einem der Ansprüche 1 bis 14.

## Claims

1. A self-supporting load-bearing structure (S_{P}) including an assembly (ENS₁) of N beams (Pₖ), N being even and greater than or equal to six, the self-supporting load-bearing structure (S_{P}) comprising connecting elements (L_{x,y}) connecting the beams (Pₖ) together and keeping each beam (Pₖ) bearing against a first adjacent beam (Pₖ₁) at a first, top bearing point (Aₓ, _{y}) of the beam (Pₖ), and keeping each beam (Pₖ) bearing against a second adjacent beam (Pₖ₂) at a second, bottom bearing point (B_{x, y}) of the beam (Pₖ), the first top bearing point (Aₓ, _{y}) and the second bottom bearing point (B_{x, y}) being distant from a first, bottom end (E₁ ) of the beam (Pₖ) and from a second, top end (E₂ ) of the beam (Pₖ), said beams (Pₖ) being configured and the connecting elements (L_{x, y}) connecting the beams (Pₖ) to each other so that the self-supporting load-bearing structure (Sₚ) is in a mounted configuration in which:
▪ The self-supporting load-bearing structure (Sₚ) is stable on its own and rests on a support by the first bottom ends (E₁) of said beams (Pₖ) of the assembly (ENS₁);
▪ Each beam (Pₖ) crosses the first adjacent beam (Pₖ₁) at the first top bearing point (Aₓ, _{y}) and crosses the second adjacent beam (Pₖ₂) at the second bottom bearing point (B_{x, y});
▪ Projections of the first top bearing points (Aₓ, _{y}) and the second bottom bearing points, (B_{x, y}) on a foreground (PL₁) form vertices of a convex polygon (PGN) of which each side connects a projection (Y_{x, y}) of one of the first top bearing points (Aₓ, _{y}) on the first plane (PL₁) to a projection (Z_{x, y}) of one of the second bottom bearing points (B_{x, y}) on said first plane (PL₁ ).
▪ Each beam (Pₖ) is:
▪ Either closer to a vertical axis (O_{y}) passing through a center of the convex polygon (PGN) than the first adjacent beam (Pₖ₁), at the first top bearing point (A_{x, y}) and further away from the vertical axis (O_{y}) than the second adjacent beam (Pₖ₂), at the second bottom bearing point (B_{x,y});
▪ Either further away from the vertical axis (O_{y}) than the first adjacent beam (Pₖ₁), at the first top bearing point (Aₓ, _{y}) and closer to the vertical axis (Oₓ) than the second adjacent beam (Pₖ₂) at the second bottom bearing point (B_{x,y}).

2. The self-supporting load-bearing structure according to claim 1, wherein the projections (Yₓ, _{y}) of the top bearing point (Aₓ, _{y}) and the projections (Z_{x, y}) of the bottom bearing point (B_{x, y}) of each beam (Pₖ) with its two respective adjacent beams in the first plane (PL₁) form the ends of one side of the convex polygon (PGN).

3. The self-supporting load-bearing structure according to any one of claims 1 to 2, wherein, for each beam (Pₖ) of the structure, the second top ends (E₂) are further away from the vertical axis (O_{y}) than the first bottom ends (E₁).

4. The self-supporting load-bearing structure according to any one of claims 1 to 2, wherein, for each beam (Pₖ) of the structure, the first bottom ends (E₁) are further away from the vertical axis (O_{y}) than the second top ends (E₂).

5. The self-supporting load-bearing structure according to any one of the preceding claims, wherein each beam (Pₖ) forms a gantry (POᵣₜ) with the first adjacent beam (Pₖ₁) to said beam (Pₖ), and forms a sub-gantry (SPOᵣₜ) with the second adjacent beam (Pₖ₂) to said beam (Pₖ), and wherein the first adjacent beam (Pₖ₁) belongs to a sub-gantry (SPOᵣₜₖ₁, SPOᵣₜₖ₂) adjacent to the gantry (POᵣₜ) to which said beam (Pₖ) belongs.

6. The self-supporting load-bearing structure (Sₚ) according to any one of the preceding claims, wherein each beam (Pₖ) forms a gantry (POᵣₜ) with the first adjacent beam (Pₖ₁) to said beam (Pₖ) and forms a sub-gantry (SPOᵣₜ) with the second adjacent beam (Pₖ₂) to said beam (Pₖ), and wherein:
▪ each sub-gantry (SPOᵣₜ) has a first angle of inclination (α₁) with respect to the ground and oriented towards a center of the structure (Sₚ) less than 90°;
▪ each gantry (POᵣₜ) has a second angle of inclination (α₂) with respect to the ground and oriented outwardly of the structure (Sₚ) of less than 90°.

7. The self-supporting load-bearing structure according to any one of the preceding claims, wherein projections (W_{y}) of each of the first bottom ends (E₁) and of each of the second top ends (E₂) of each beam (Pk) on the first plane (PL₁) are outwardly of said convex polygon (PGN).

8. The self-supporting load-bearing structure (S_{P}) according to any one of the preceding claims, wherein each beam (Pₖ) has a maximum of two bearing points with other beams of the structure.

9. The self-supporting load-bearing structure (S_{P}) according to any one of the preceding claims, **characterized in that** the connecting elements (L_{x, y}) connect the beams (Pₖ) together so that each beam (Pₖ) of the assembly (ENS₁) exerts:
▪ Either a first reaction force (Fᵣ₁) having a radial component relative to an axis parallel to the gravitational force and passing through a center of the polygon (PGN) on the first beam (Pₖ₁) at the first top bearing point (A_{x, y}) and along a first direction, and a second reaction force (Fᵣ₂) having a radial component along a second direction opposite to the first direction on the second beam (Pₖ₂) immediately adjacent to said beam (Pₖ) and at the second bottom bearing point (B_{x, y});
▪ Or a third reaction force (Fᵣ₃) having a radial component relative to an axis parallel to the gravitational force and passing through a center of the polygon on the second beam (Pₖ₂) immediately adjacent to said beam (Pₖ) at the second bottom bearing point (B_{x, y}) and along the first direction, and a fourth reaction force (Fᵣ₄) having a radial component along the second direction opposite to the first direction on the first beam (Pₖ₁) at the first top bearing point (Aₓ, _{y}).

10. The self-supporting load-bearing structure (S_{P}) according to any one of the preceding claims, wherein the beams (Pₖ) are configured and the connecting elements (L_{x, y}) connect the beams (Pₖ) to each other so that the structure is in a mounted configuration in which:
▪ the convex polygon (PGN) is regular,
▪ projections of the first bottom ends (E₁) of the beams (Pₖ) on the foreground (PL₁) are located on a same circle with a center located at the center of the polygon (PGN).

11. The self-supporting load-bearing structure (S_{P}) according to any one of the preceding claims, wherein the beams (Pₖ) have substantially a same length, said self-supporting load-bearing structure being **characterized in that** a first distance separating the first top bearing point (Aₓ, _{y}) from the first bottom end (E₁) of the beam (Pₖ) is substantially equal to a second distance separating the second bottom bearing point (B_{x, y}) from the second top end (E₂) of the beam (Pₖ) and is substantially equal to one third of the length of the beam (Pₖ).

12. The self-supporting load-bearing structure (S_{P}) according to any one of the preceding claims, wherein the second bottom bearing points (B_{x, y}) comprise points belonging to a same second plane (PL₂) substantially parallel to the first plane (PL₁), and wherein the first plane (PL₁) is substantially perpendicular to the gravitational force.

13. The self-supporting load-bearing structure (S_{P}) according to any one of the preceding claims, wherein at least one of the connecting elements (L_{x, y}) is in a first configuration in which it allows three rotational degrees of freedom (Dr₁, Dr₂, Dᵣ₃) between a beam (Pₖ) of the assembly (ENS₁) and either:
▪ the first beam (Pₖ₁) adjacent to said beam (Pₖ) or,
▪ the second beam (Pₖ₂) adjacent to said beam (Pₖ).

14. A kit for mounting a self-supporting load-bearing structure (Sₚ) according to any one of the preceding claims, comprising:
▪ the assembly (ENS₁) of at least six beams (Pₖ), the lengths of the beams (Pₖ) being between 0.5 meter and 6 meters, the first bottom ends (E₁) of the beams (Pₖ) being machined so that, in the mounted configuration, the beams (Pₖ) have a single bearing point on the support at their first bottom ends (E₁);
▪ the connecting elements (L_{x, y}), said connecting elements (L_{x, y}) being able to connect the beams (Pₖ) together so that the self-supporting load-bearing structure (Sₚ) is able to be in the mounted configuration,
▪ end caps, each of said end caps being able to cover a portion of a beam (Pₖ) from a first end (E₁) of the beam (Pₖ).

15. An accommodation, a compartment, a toy, a gym apparatus, a piece of furniture, a chassis, a platform, a game structure, or a festival tent comprising a self-supporting load-bearing structure (S_{P}) according to any one of claims 1 to 14.
